# EUROPÄISCHE PATENTSCHRIFT

(11) **EP 4 043 727 B1**
(45) Veröffentlichungstag und Bekanntmachung des Hinweises auf die Patenterteilung: **26.06.2024**
(21) Anmeldenummer: 22153712.9
(22) Anmeldetag: 27.01.2022
(51) Int. Cl.: F04B 7/04, F04B 53/10, F04C 14/16, F04C 14/22, F04C 2/344, F15B 13/02

(54) **QUERSCHNITTSOPTIMIERTES STEUERVENTIL**
CONTROL VALVE WITH OPTIMIZED CROSS SECTION
SOUPAPE DE COMMANDE OPTIMISÉE AU NIVEAU DE LA SECTION TRANSVERSALE

(30) Priorität: 27.01.2021 DE 102021101830
(43) Veröffentlichungstag der Anmeldung: 17.08.2022
(73) Patentinhaber: Schwäbische Hüttenwerke Automotive GmbH, 73433 Aalen (DE)
(72) Erfinder: KÜCHLE, Stefan, 88453 Erolzheim (DE); TONTSCH, Thomas, 88427 Bad Schussenried (DE); SCHILLING, Simone, 88422 Ogglshausen (DE)
(74) Vertreter: SSM Sandmair

(56) Entgegenhaltungen:
- EP-A1- 0 049 838
- DE-A1- 10 161 296
- DE-A1-102019 205 640
- DE-B1- 2 902 751

## Beschreibung

Die vorliegende Erfindung betrifft ein Steuerventil für eine Pumpe, sowie eine Pumpe, die ein solches Steuerventil umfasst. Das Steuerventil weist ein Ventilgehäuse auf, das eine Kolbenkammer begrenzt. Innerhalb der Kolbenkammer ist ein bewegbarer Kolben angeordnet. Vorzugsweise kann der Kolben entlang seiner Längsachse hin und her bewegt werden. Das Steuerventil umfasst ferner einen Fluidkanal, der über eine Mündungsöffnung in die Kolbenkammer mündet. Die Mündungsöffnung definiert eine Mündungssteuerkante des Steuerventils.

Aus dem Stand der Technik sind Steuerventile bekannt, die einen Kolben mit einer Kolbensteuerkante aufweisen. Der Kolben verschließt oder öffnet in Abhängigkeit der Kolbenposition eine Mündungsöffnung eines Fluidkanals des Steuerventils, wobei die Mündungsöffnung eine Steuerkante des Ventilgehäuses definiert. Durch das Zusammenspiel der Kolbensteuerkante mit der Steuerkante des Ventilgehäuses kann der Fluidstrom zwischen dem Fluidkanal und der Kolbenkammer gesteuert werden. Verdeckt der Kolben beispielsweise die Mündungsöffnung des Fluidkanals vollständig, so spricht man von einer positiven Überdeckung der Kolbensteuerkante gegenüber der Steuerkante des Ventilgehäuses. Bei einer positiven Überdeckung dichtet der Kolben die Kolbenkammer gegenüber dem Fluidkanal ab. Wird der Kolben innerhalb der Kolbenkammer so bewegt, dass sich die Kolbensteuerkante der Steuerkante des Ventilgehäuses annähert und diese passiert, wird die Mündungsöffnung des Fluidkanals durch den Kolben zumindest teilweise frei gelegt. Ein Fluidstrom zwischen der Kolbenkammer und dem Fluidkanal ist dann möglich. In diesem Zustand überdeckt die Kolbensteuerkante die Steuerkante des Ventilgehäuses negativ (negative Überdeckung). Während die Kolbensteuerkante die Steuerkante des Ventilgehäuses passiert, gibt es einen Zustand, bei dem die Kolbensteuerkante noch so an der Steuerkante des Ventilgehäuses anliegt, dass noch kein Fluidstrom zwischen der Kolbenkammer und dem Fluidkanal möglich ist. Allerdings reicht in diesem Zustand schon die geringste Kolbenbewegung in Richtung der negativen Überdeckung aus, um einen Fluidstrom frei zu geben. Diese Kolbenposition, welche den Übergang zwischen positiver und negativer Überdeckung definiert, wird im Folgenden als Nullüberdeckung oder auch Nullschnitt Position bezeichnet.

Die aus dem Stand der Technik bekannten Steuerventile haben den Nachteil, dass der Fluidstrom zwischen dem Fluidkanal und der Kolbenkammer, ausgehend von der Nullüberdeckung bis hin zur maximalen negativen Überdeckung, proportional mit der Kolbenbewegung ansteigt oder im Wesentlichen konstant bleibt. So offenbaren die EP 0049 838 A1 und die DE 10 2019 205 640 A1 beispielsweise jeweils ein Steuerventil mit einer im Vergleich zu dem Fluidkanal radial erweiterten Mündungsöffnung, während die DE 101 61 296 A1 eine Mündungsöffnung offenbart, welche den gleichen Durchmesser wie der Fluidkanal aufweist. Auf diese Weise steigt der Fluidstrom zwischen dem Fluidkanal und der Kolbenkammer, ausgehend von der Nullüberdeckung bis hin zur maximalen negativen Überdeckung, proportional mit der Kolbenbewegung an oder bleibt im Wesentlichen konstant.

Für die Steuerung von Pumpen, insbesondere für die Steuerung von Pumpen zur Förderung von Fluiden, kann es allerdings vorteilhaft sein, den proportionalen Anstieg des Fluidstroms oder den konstant bleibenden Fluidstrom mit einem sprunghaften Anstieg des Fluidstroms zu kombinieren.

Es ist eine erste Aufgabe der Erfindung ein Steuerventil mit einem verbesserten Steuerverhalten bereitzustellen. Eine zweite Aufgabe der Erfindung ist es, eine Pumpe bereitzustellen, die ein Steuerventil mit einem verbesserten Steuerverhalten umfasst.

Die erste Aufgabe der Erfindung wird mit den Merkmalen des Anspruchs 1 gelöst. Vorteilhafte Weiterbildung ergeben sich aus den abhängigen Ansprüchen, der Beschreibung und den Figuren. Die Merkmale des Anspruchs 15 lösen die zweite Aufgabe der Erfindung. Auch hier ergeben sich vorteilhafte Weiterbildungen aus der Beschreibung und den Figuren.

Das erfindungsgemäße Steuerventil ist dazu ausgebildet eine Pumpe zu steuern, die dazu geeignet ist ein Fluid zu fördern. Das Steuerventil umfasst ein eine Kolbenkammer begrenzendes Ventilgehäuse, welches einteilig oder mehrteilig ausgebildet sein kann. Ein Kolben des Steuerventils ist so in der Kolbenkammer angeordnet, dass der Kolben beispielsweise entlang seiner Längsachse axial hin und her bewegt werden kann. Ein Fluidkanal des Steuerventils mündet mit einer Mündungsöffnung in die Kolbenkammer, wobei die Mündungsöffnung eine Mündungssteuerkante des Steuerventils definiert. Erfindungsgemäß weist das Ventilgehäuse eine Vertiefung auf, die sich in den Fluidkanal erstreckt. Die Vertiefung definiert eine Vertiefungssteuerkante des Steuerventils, welche in Bezug auf die Mündungssteuerkante axial versetzt ist. Zusätzlich kann der Kolben eine Kolbenvertiefung, die eine Kolbenvertiefungssteuerkante definiert, umfassen. Erfindungsgemäß bildet in einer Schnittansicht der Kolbenkammer die Vertiefungssteuerkante gemeinsam mit einer Flucht der Vertiefungssteuerkante eine Sekante in Bezug auf den Außenumfang der Mündungsöffnung.

Unter dem Begriff "Steuerkante" wird im Folgenden eine Kante des Ventilgehäuses (Gehäusesteuerkante) oder des Kolbens (Kolbensteuerkante) verstanden, die jeweils in Wechselwirkung mit einer Steuerkante des anderen Steuerventilelements einen Fluidstrom zulässt, abriegelt oder sprunghaft verändert. Beispielsweise kann eine Bewegung des Kolbens entlang seiner Längsachse dazu führen, dass eine Kolbensteuerkante in Bezug auf eine Gehäusesteuerkante von einer positiven Überdeckung zu einer negativen Überdeckung wechselt und dadurch ein Fluidstrom innerhalb des Steuerventils oder durch das Steuerventil zugelassen wird oder sprunghaft ansteigt. Umgekehrt kann eine Bewegung des Kolbens in die entgegengesetzte Richtung dazu führen, dass eine Kolbensteuerkante in Bezug auf eine Gehäusesteuerkante von einer negativen Überdeckung zu einer positiven Überdeckung wechselt und dadurch ein Fluid Strom innerhalb des Steuerventils oder durch das Steuerventil abgeriegelt oder sprunghaft begrenzt wird.

Vorzugsweise sind die Mündungssteuerkante und die Vertiefungssteuerkante des erfindungsgemäßen Steuerventils als Gehäusesteuerkanten und die Kolbenvertiefungssteuerkante als Kolbensteuerkante ausgebildet.

Der Kolben des erfindungsgemäßen Steuerventils kann eine Kolbensteuerkante umfassen. Vorteilhafterweise sind die Mündungssteuerkante und die Vertiefungssteuerkante in Bezug auf die Kolbensteuerkante gleichartig ausgebildet. Das heißt, dass beispielsweise eine Bewegung des Kolbens entlang seiner Längsachse in eine erste Bewegungsrichtung dazu führt, dass die Kolbensteuerkante in Bezug auf die Mündungssteuerkante von einer positiven Überdeckung zu einer negativen Überdeckung wechselt und bei weiterer Bewegung des Kolbens in die erste Bewegungsrichtung auch in Bezug auf die Vertiefungssteuerkante von einer positiven Überdeckung zu einer negativen Überdeckung wechselt. Umgekehrt kann eine Bewegung des Kolbens entlang seiner Längsachse in eine zweite Bewegungsrichtung dazu führen, dass die Kolbensteuerkante in Bezug auf die Vertiefungssteuerkante von einer negativen Überdeckung zu einer positiven Überdeckung wechselt und bei weiterer Bewegung des Kolbens in die zweite Bewegungsrichtung auch in Bezug auf die Mündungssteuerkante von einer negativen Überdeckung zu einer positiven Überdeckung wechselt.

Die Vertiefung ist so im Ventilgehäuse angeordnet, dass in einer Schnittansicht der Kolbenkammer die Vertiefungssteuerkante und eine Flucht der Vertiefungssteuerkante eine Sekante in Bezug auf den Außenumfang der Mündungsöffnung bilden. Die Flucht der Vertiefungssteuerkante kann insbesondere durch eine imaginäre Verlängerung der Vertiefungssteuerkante in Umfangsrichtung des Ventilgehäuses gebildet werden. Bei dieser beispielhaften Ausführungsform ist sichergestellt, dass sich die Vertiefung in den Fluidkanal erstreckt und die Vertiefungssteuerkante zur Mündungssteuerkante axial versetzt ist. Vorzugsweise bildet die Vertiefungssteuerkante gemeinsam mit der Flucht der Vertiefungssteuerkante in einer Schnittansicht der Kolbenkammer keine Tangente und/oder keine Passante in Bezug auf den Außenumfang der Mündungsöffnung.

Die Mündungssteuerkante und/oder die Vertiefungssteuerkante kann/können in Bezug auf die Längsachse quer, insbesondere senkrecht, orientiert sein.

Bei einer weiteren beispielhaften Ausführungsform ist das Steuerventil so ausgebildet, dass der Querschnitt der Kolbenkammer durch die Vertiefung vergrößert wird. Bevorzugt wird der Querschnitt der Kolbenkammer durch die Vertiefung nur in einem axialen Abschnitt der Kolbenkammer vergrößert. Der axiale Abschnitt der Kolbenkammer, indem der Querschnitt der Kolbenkammer durch die Vertiefung vergrößert wird, erstreckt sich vorteilhafterweise innerhalb der axialen Erstreckung der Mündungsöffnung. Anders formuliert ist die axiale Erstreckung der Vertiefung, die eine Querschnittsvergrößerung der Kolbenkammer bewirkt, auf die axiale Erstreckung der Mündungsöffnung begrenzt, insbesondere kleiner als die axiale Erstreckung der Mündungsöffnung.

Die Vertiefungssteuerkante kann in Bezug auf die Mündungssteuerkante so axial versetzt sein, dass in einer ersten Kolbenposition die Kolbensteuerkante des Kolbens die Mündungssteuerkante negativ überdeckt und die Vertiefungssteuerkante positiv überdeckt oder mit der Vertiefungssteuerkante in einer Nullüberdeckung steht. Die Mündungssteuerkante und die Vertiefungssteuerkante können axial so zueinander versetzt sein, dass sich die Kolbensteuerkante in der ersten Kolbenposition axial zwischen der Mündungssteuerkante und der Vertiefungssteuerkante befindet. Alternativ kann die Kolbensteuerkante in der ersten Kolbenposition mit der Vertiefungssteuerkante axial überlappen.

Vorzugsweise sind die Mündungssteuerkante und die Vertiefungssteuerkante axial so zueinander versetzt, dass die Kolbensteuerkante in einer zweiten Kolbenposition die Mündungssteuerkante und die Vertiefungssteuerkante negativ überdeckt. Mit anderen Worten können die Mündungssteuerkante und die Vertiefungssteuerkante axial so zueinander versetzt sein, dass die Vertiefungssteuerkante in der zweiten Kolbenposition zwischen der Kolbensteuerkante und der Mündungssteuerkante liegt. In der zweiten Kolbenposition wird vorteilhafterweise weder die Mündungssteuerkante noch die Vertiefungssteuerkante dichtend vom Kolben axial überlappt.

Bei einer weiteren beispielhaften Ausführungsform begrenzen der Kolben und das Ventilgehäuse einen Fluidraum. Der Fluidraum kann so ausgebildet sein, dass der Fluidraum mit einem Hochruckbereich der Pumpe oder einem Niederdruckbereich der Pumpe, insbesondere einem Fluidreservoir, fluidisch verbunden werden kann.

Der Fluidraum kann in der ersten Kolbenposition fluidkommunizierend mit dem Fluidkanal verbunden sein. Vorzugsweise ist der Fluidraum in der ersten Kolbenposition durch den Kolben von der Vertiefung getrennt, insbesondere fluidisch getrennt. Vorteilhafterweise ist durch die Trennung des Fluidraums von der Vertiefung kein direkter bzw. unmittelbarerer Fluidstrom zwischen dem Fluidraum und der Vertiefung möglich. In der zweiten Kolbenposition kann der Fluidraum mit dem Fluidkanal und der Vertiefung fluidkommunizierend verbunden sein. Das heißt, dass in der zweiten Kolbenposition sowohl ein direkter bzw. unmittelbarer Fluidstrom zwischen dem Fluidraum und dem Fluidkanal als auch zwischen dem Fluidraum und der Vertiefung möglich ist.

Vorzugsweise wird der Strömungsquerschnitt der Mündungsöffnung in der ersten und/oder der zweiten Kolbenposition durch den Kolben auf einen effektiven Strömungsquerschnitt reduziert. Beispielsweise wird ein Teil der Mündungsöffnung in der ersten Kolbenposition so durch den Kolben verdeckt, dass ein Fluidstrom nur durch einen Teil der Mündungsöffnung zwischen dem Fluidkanal und dem Fluidraum hin und/oder her strömen kann. Der in diesem Fall durchströmte Teil der Mündungsöffnung definiert den effektiven Strömungsquerschnitt. In der zweiten Kolbenposition kann sich auch zwischen dem Fluidraum und der Vertiefung ein Fluidstrom ausbilden. Da sich die Vertiefung in den Fluidkanal erstreckt, kann die Vertiefung in der zweiten Kolbenposition eine Vergrößerung des effektiven Strömungsquerschnittes bewirken. Insbesondere wird der effektive Strömungsquerschnitt der Mündungsöffnung in der zweiten Kolbenposition um einen Strömungsquerschnitt der Vertiefung vergrößert. Eine solche Vergrößerung des effektiven Strömungsquerschnittes bewirkt vorteilhafterweise einen sprunghaften Anstieg des Fluidstroms, wenn der Kolben von der ersten Kolbenposition in die zweiten Kolbenposition wechselt.

In einer dritten Kolbenposition kann die Kolbensteuerkante die Mündungssteuerkante und die Vertiefungssteuerkante positiv überdecken. Alternativ kann die Kolbensteuerkante in der dritten Kolbenposition mit der Mündungssteuerkante in einer Nullüberdeckung stehen und die Vertiefungssteuerkante positiv überdecken. Die Mündungssteuerkante kann sich in der dritten Kolbenposition axial zwischen der Kolbensteuerkante und der Vertiefungssteuerkante befinden. Alternativ kann die Kolbensteuerkante in der dritten Kolbenposition mit der Mündungssteuerkante axial überlappen. In der dritten Kolbenposition kann der Kolben den Fluidraum vom Fluidkanal und der Vertiefung trennen. Vorzugsweise kann sich in der dritten Kolbenposition zwischen dem Fluidraum und dem Fluidkanal und zwischen dem Fluidraum und der Vertiefung kein Fluidstrom ausbilden. Die Mündungsöffnung kann in der dritten Kolbenposition durch den Kolben vollständig verdeckt sein.

Durch die Vertiefung wird, die dem Kolben zugewandte Innenmantelfläche des Ventilgehäuses vorteilhafterweise von der Außenmantelfläche des Kolbens beabstandet. Die Vertiefung wird insbesondere axial durch eine erste Vertiefungswand und eine der ersten Vertiefungswand gegenüberliegenden, vorzugsweise axial gegenüberliegenden, zweiten Vertiefungswand begrenzt. Die erste Vertiefungswand und die zweite Vertiefungswand sind vorzugsweise parallel zueinander. Vorteilhafterweise bildet eine der beiden Vertiefungswände die Vertiefungssteuerkante. Die erste und/oder die zweite Vertiefungswand können sich axial innerhalb des axialen Erstreckungsbereichs der Mündungsöffnung befinden.

Die Vertiefung kann sich zumindest teilweise über den Umfang der Innenmantelfläche des Ventilgehäuses erstrecken. Alternativ kann sich die Vertiefung auch über den gesamten Umfang der Innenmantelfläche des Ventilgehäuses erstrecken. Der axiale Abstand zwischen der ersten Vertiefungswand und der zweiten Vertiefungswand kann insbesondere kleiner sein als der Durchmesser der Mündungsöffnung. Davon unabhängig kann der axiale Abstand zwischen der ersten Vertiefungswand und der zweiten Vertiefungswand über den Umfang der Innenmantelfläche des Ventilgehäuses zumindest abschnittsweise konstant sein und/oder zumindest abschnittsweise variieren.

Bei einer weiteren beispielhaften Ausführungsform umfasst die Vertiefung einen Vertiefungsgrund, der einen radialen Abstand zur Innenmantelfläche des Ventilgehäuses aufweist. Axial kann der Vertiefungsgrund durch die erste Vertiefungswand und die zweite Vertiefungswand begrenzt werden. Der radiale Abstand des Vertiefungsgrundes zur Innenmantelfläche des Ventilgehäuses kann über den Umfang der Innenmantelfläche des Ventilgehäuses zumindest abschnittsweise konstant sein und/oder zumindest abschnittsweise variieren.

Vorzugsweise ist die Vertiefung als Nut, insbesondere als sichelförmige Nut, ausgebildet. Die Nut ist vorteilhafterweise zur Kolbenkammer hin offen.

Bei einer weiteren Ausführungsform des Steuerventils bildet der Fluidkanal einen ersten Fluidkanal, wobei das Steuerventil zusätzlich einen zweiten Fluidkanal aufweisen kann. Der zweite Fluidkanal kann in die Vertiefung, insbesondere in den Vertiefungsgrund der Vertiefung, münden. Dies bewirkt vorteilhafterweise, dass die Vertiefung einen Durchgang, vorzugsweise einen Bypass, zwischen dem ersten Fluidkanal und dem zweiten Fluidkanal bildet. Der erste und der zweite Fluidkanal können unabhängig von der Kolbenposition des Kolbens über die Vertiefung fluidkommunizierend miteinander verbunden sein.

Ungeachtet dessen kann ein dritter Fluidkanal in den Fluidraum münden. Vorzugsweise verbindet der dritte Fluidkanal den Fluidraum mit einem Hochruckbereich der Pumpe oder einem Niederdruckbereich der Pumpe fluidisch.

Bei einer weiteren beispielhaften Ausführungsform definiert die Mündungsöffnung eine erste Mündungssteuerkante und eine zusätzliche zweite Mündungssteuerkante. Die zweite Mündungssteuerkante ist vorzugsweise entsprechend des Durchmessers der Mündungsöffnung von der ersten Mündungssteuerkante axial beabstandet. Die zweite Mündungssteuerkante ist vorteilhafterweise als Gehäusesteuerkante ausgebildet.

Die Vertiefung kann eine erste Vertiefungssteuerkante und eine zusätzliche zweite Vertiefungssteuerkante definieren. Beispielsweise kann die erste Vertiefungswand die erste Vertiefungssteuerkante und die zweiten Vertiefungswand die zweite Vertiefungssteuerkante definieren. In einer Schnittansicht der Kolbenkammer kann die zweite Vertiefungssteuerkante gemeinsam mit einer Flucht der zweiten Vertiefungssteuerkante in Bezug auf den Außenumfang der Mündungsöffnung eine Sekante bilden. Die Flucht der zweiten Vertiefungssteuerkante kann insbesondere durch eine imaginäre Verlängerung der zweiten Vertiefungssteuerkante in Umfangsrichtung des Ventilgehäuses gebildet werden. Bei einer solchen beispielhaften Ausführungsform ist sichergestellt, dass sich die Vertiefung in den Fluidkanal erstreckt und die zweite Vertiefungssteuerkante zur zweiten Mündungssteuerkante axial versetzt ist. Vorzugsweise bildet die zweite Vertiefungssteuerkante gemeinsam mit der Flucht der zweiten Vertiefungssteuerkante in einer Schnittansicht der Kolbenkammer keine Tangente und/oder keine Passante in Bezug auf den Außenumfang der Mündungsöffnung. Die zweite Vertiefungssteuerkante ist vorteilhafterweise als Gehäusesteuerkante ausgebildet.

Die erste Mündungssteuerkante und die erste Vertiefungssteuerkante sind vorzugsweise gleichartig. Insbesondere in Bezug auf die erste Kolbensteuerkante sind die erste Mündungssteuerkante und die erste Vertiefungssteuerkante gleichartig. Die zweite Mündungssteuerkante und die zweite Vertiefungssteuerkante sind vorzugsweise gleichartig.

Der Kolben kann eine erste Kolbensteuerkante und eine zusätzliche zweite Kolbensteuerkante umfassen. Vorteilhafterweise sind die zweite Mündungssteuerkante und die zweite Vertiefungssteuerkante in Bezug auf die zweite Kolbensteuerkante gleichartig ausgebildet. Das heißt, dass beispielsweise eine Bewegung des Kolbens entlang seiner Längsachse in die erste Bewegungsrichtung dazu führt, dass die zweite Kolbensteuerkante in Bezug auf die zweite Vertiefungssteuerkante von einer negativen Überdeckung zu einer positiven Überdeckung wechselt und bei weiterer Bewegung in die erste Bewegungsrichtung auch in Bezug auf die zweite Mündungssteuerkante von einer negativen Überdeckung zu einer positiven Überdeckung wechselt. Umgekehrt kann eine Bewegung des Kolbens entlang seiner Längsachse in die zweite Bewegungsrichtung dazu führen, dass die zweite Kolbensteuerkante in Bezug auf die zweite Mündungssteuerkante von einer positiven Überdeckung zu einer negativen Überdeckung wechselt und bei weiterer Bewegung in die zweite Bewegungsrichtung auch in Bezug auf die zweite Vertiefungssteuerkante von einer positiven Überdeckung zu einer negativen Überdeckung wechselt.

Vorzugsweise sind die zweite Mündungssteuerkante und die zweite Vertiefungssteuerkante in Bezug auf die zweite Kolbensteuerkante analog der ersten Mündungssteuerkante und der ersten Vertiefungssteuerkante in Bezug auf die erste Kolbensteuerkante ausgebildet. Funktional können die zweite Mündungssteuerkante und die zweite Vertiefungssteuerkante konträr zur ersten Mündungssteuerkante und der ersten Vertiefungssteuerkante ausgebildet sein. Beispielsweise kann eine Bewegung des Kolbens entlang seiner Längsachse in die erste Bewegungsrichtung dazu führen, dass die erste Kolbensteuerkante in Bezug auf die erste Mündungssteuerkante von einer positiven Überdeckung zu einer negativen Überdeckung wechselt, wobei die gleiche Bewegung des Kolbens dazu führt, dass die zweite Kolbensteuerkante in Bezug auf die zweite Mündungssteuerkante von einer negativen Überdeckung zu einer positiven Überdeckung wechselt.

Die zweite Vertiefungssteuerkante ist bevorzugt so von der zweiten Mündungssteuerkante axial beabstandet, dass die zweite Kolbensteuerkante des Kolbens die zweite Mündungssteuerkante in einer vierten Kolbenposition negativ überdeckt und die zweite Vertiefungssteuerkante in der vierten Kolbenposition positiv überdeckt oder mit der zweiten Vertiefungssteuerkante in Nullüberdeckung steht. Vorzugsweise befindet sich die zweite Kolbensteuerkante in der vierten Kolbenposition zwischen der zweite Mündungssteuerkante und der zweiten Vertiefungssteuerkante. Alternativ kann die zweite Kolbensteuerkante in der vierten Kolbenposition auch axial mit der zweiten Vertiefungssteuerkante überlappen.

In einer fünften Kolbenposition kann die zweite Kolbensteuerkante die zweite Mündungssteuerkante und die zweite Vertiefungssteuerkante negativ überdecken. Vorzugsweise befindet sich die zweite Vertiefungssteuerkante in der fünften Kolbenposition axial zwischen der zweiten Kolbensteuerkante und der zweiten Mündungssteuerkante.

Der Kolben kann entlang der ersten Bewegungsrichtung eine erste Endstellung und entlang der zweiten Bewegungsrichtung eine zweite Endstellung aufweisen. Vorzugsweise entspricht die erste Endstellung des Kolbens der ersten oder der zweiten Kolbenposition. Die zweite Endstellung des Kolbens kann der vierten oder der fünften Kolbenposition entsprechen.

Bei einer alternativen Ausführungsform des Steuerventils kann die zweite Mündungssteuerkante axial mit der zweiten Vertiefungssteuerkante überlappen. Mit anderen Worten fallen bei der alternativen Ausführungsform die zweite Mündungssteuerkante und die zweite Vertiefungssteuerkante zusammen, so dass sie gemeinsam eine einzige Gehäusesteuerkante bilden. Die zweite Mündungssteuerkante und die zweite Vertiefungssteuerkante können in Bezug auf die zweite Kolbensteuerkante eine gemeinsame Gehäusesteuerkante bilden.

Bei einer weiteren beispielhaften Ausführungsform umfasst das Steuerventil einen ersten Fluidraum und einen zusätzlichen zweiten Fluidraum. Vorzugsweise begrenzen der Kolben und das Ventilgehäuse den zweiten Fluidraum. Der zweite Fluidraum ist insbesondere durch den Kolben vom ersten Fluidraum fluidisch getrennt. Der zweite Fluidraum kann von einer Stirnfläche des Kolbens und dem Ventilgehäuse begrenzt werden. Das Volumen des zweiten Fluidraums kann von der Kolbenposition des Kolbens abhängig sein. Beispielsweise kann das Volumen des zweiten Fluidraums bei der ersten Endstellung des Kolbens kleiner sein als in der zweiten Endstellung.

Der erste Fluidraum ist vorteilhafterweise dazu ausgebildet mit einem Hochdruckbereich der Pumpe fluidisch verbunden werden zu können. Der zweite Fluidraum ist vorteilhafterweise dazu ausgebildet mit einem Niederdruckbereich der Pumpe, insbesondere einem Fluidreservoir, fluidisch verbunden werden zu können.

Der zweite Fluidraum kann in der vierten Kolbenposition fluidkommunizierend mit dem Fluidkanal verbunden sein und durch den Kolben von der Vertiefung getrennt, insbesondere fluidisch getrennt, sein. Vorteilhafterweise ist durch die Trennung des zweiten Fluidraums von der Vertiefung durch den Kolben kein direkter bzw. unmittelbarerer Fluidstrom zwischen dem zweiten Fluidraum und der Vertiefung möglich. In der fünften Kolbenposition kann der zweite Fluidraum mit dem Fluidkanal und der Vertiefung fluidkommunizierend verbunden sein. Das heißt, dass in der fünften Kolbenposition sowohl ein direkter bzw. unmittelbarer Fluidstrom zwischen dem zweiten Fluidraum und dem Fluidkanal als auch zwischen dem zweiten Fluidraum und der Vertiefung möglich ist.

Vorzugsweise ist der zweite Fluidraum in der ersten, der zweiten und/oder der dritten Kolbenposition durch den Kolben vom Fluidkanal und von der Vertiefung fluidisch getrennt. Das heißt, dass sich insbesondere in der ersten, der zweiten und/oder der dritten Kolbenposition zwischen dem zweiten Fluidraum und dem Fluidkanal und zwischen dem zweiten Fluidraum und der Vertiefung kein Fluidstrom ausbilden kann.

Der erste Fluidraum kann in der vierten und/oder der fünften Kolbenposition durch den Kolben vom Fluidkanal und von der Vertiefung fluidisch getrennt sein. Das heißt, dass sich insbesondere in der vierten und/oder fünften Kolbenposition zwischen dem ersten Fluidraum und dem Fluidkanal und zwischen dem ersten Fluidraum und der Vertiefung bevorzugt kein Fluidstrom ausbilden kann.

Das Steuerventil ist insbesondere für den Einsatz in einem Kraftfahrzeug vorgesehen. Dementsprechend kann das Steuerventil als Kraftfahrzeugventil ausgebildet sein. Insbesondere kann das Steuerventil als Kraftfahrzeugventil für eine Motorschmiermittelpumpe oder für eine Getriebepumpe ausgebildet sein. Das Steuerventil ist vorzugsweise zur Steuerung eines Volumenstromes einer Flüssigkeit, insbesondere eines Schmier-, Kühl- und/oder Betätigungsmittels, vorgesehen. Dementsprechend kann das Steuerventil als Flüssigkeitsventil ausgebildet sein. Beispielsweise kann die Flüssigkeit als Öl, insbesondere als Motorschmieröl oder Getriebeöl, ausgeführt sein. Das Steuerventil kann zur Steuerung eines Volumenstroms zur Versorgung, Schmierung, Steuerung und/oder Kühlung eines Kraftfahrzeugantriebs, insbesondere eines Kraftfahrzeugmotors, einer Kraftfahrzeugpumpe oder eines Kraftfahrzeuggetriebes vorgesehen sein.

Umfasst das Steuerventil einen Kolben mit einer Kolbenvertiefung, definiert die Kolbenvertiefung eine Kolbenvertiefungssteuerkante. Die Kolbenvertiefungssteuerkante ist am Kolben ausgebildet. Die Kolbenvertiefung kann beispielsweise eine Nut in der Außenumfangsfläche des Kolbens sein. Insbesondere eine axiale Begrenzungswand der Kolbenvertiefung kann die Kolbenvertiefungssteuerkante definieren. Der Kolben kann einen Durchgang aufweisen. Vorteilhafterweise erstreckt sich der Durchgang axial von der Kolbenvertiefung bis zu einer Stirnfläche des Kolbens, insbesondere bis zu einer Stirnfläche des Kolbens, die dem Fluidraum zugewandt ist. Der Durchgang kann einen engsten Strömungsquerschnitt aufweisen, wobei der Strömungsquerschnitt des Durchgangs bevorzugt kleiner ist als der Strömungsquerschnitt der Mündungsöffnung.

Vorteilhafterweise überdeckt die Kolbenvertiefungssteuerkante in einer vordefinierten Kolbenposition die Mündungssteuerkante negativ, wobei die Kolbensteuerkante in der gleichen Kolbenposition die Mündungssteuerkante positiv überdeckt. Anders formuliert kann sich bei einer Ausführungsform, bei der der Kolben eine Kolbenvertiefungssteuerkante aufweist, über den Kolben, insbesondere über die Kolbenvertiefung und den Durchgang des Kolbens, ein Fluidstrom zwischen dem Fluidraum und dem Fluidkanal ausbilden, obwohl die Kolbensteuerkante die Mündungssteuerkante positiv überdeckt. Wird der Kolben ausgehend von dieser Kolbenposition so in der Kolbenkammer bewegt, dass die Kolbensteuerkante im Bereich der positiven Überdeckung von der Mündungssteuerkante weiter distanziert wird, kann auch die Kolbenvertiefungssteuerkante die Mündungssteuerkante positiv überdecken oder gegenüber der Mündungssteuerkante eine Nullüberdeckung aufweisen. Dies bewirkt vorteilhafterweise, dass erst dann der Fluidraum und der Fluidkanal fluidisch getrennt sind.

Die erfindungsgemäße Pumpe ist dazu geeignet ein Fluid zu fördern. Die Pumpe umfasst ein Pumpengehäuse, das eine Pumpenkammer begrenzt. Das Pumpengehäuse kann einteilig, insbesondere als Gussbauteil, oder mehrteilig ausgebildet sein. Die Pumpenkammer weist einen Pumpenkammereinlass und einen Pumpenkammerauslass auf. Der Pumpenkammereinlass mündet vorzugsweise in einem Niederdruckbereich der Pumpenkammer. Der Pumpenkammerauslass mündet vorzugsweise in einem Hochdruckbereich der Pumpenkammer. Die Pumpe umfasst ferner einen Förderrotor, um das zu fördernde Fluid vom Niederdruckbereich zum Hochdruckbereich zu fördern. Der Förderrotor ist um eine Rotationsachse drehbar und wird, vorzugsweise radial, von einem in der Pumpenkammer beweglichen Verstellorgan umschlossen. Das Verstellorgan ist dazu ausgebildet die Förderleistung der Pumpe zu verstellen. Zwischen dem Verstellorgan und dem Pumpengehäuse, vorzugsweise zwischen der Außenmantelfläche des Vorstellorgans und der Innenmantelfläche des Pumpengehäuses, ist eine Stellkammer zum Verstellen des Verstellorgans ausgebildet. Die Stellkammer kann insbesondere mit einem Fluiddruck beaufschlagt werden, um das Verstellorgan in Bezug auf die Pumpenkammer zu bewegen, insbesondere zu schwenken. Zur Steuerung des Fluiddrucks innerhalb der Stellkammer umfasst die Pumpe ein Steuerventil der oben beschriebenen Art. Vorzugsweise führt ein steigender oder maximaler Fluiddruck in der Stellkammer zu einer reduzierten oder minimalen Förderleistung der Pumpe. Ein sinkender oder minimaler Fluiddruck in der Stellkammer kann zu einer steigenden oder maximalen Förderleistung der Pumpe führen.

Bei der Pumpe handelt es sich insbesondere um eine Flügelzellenpumpe, eine Zahnradpumpe, insbesondere Außenzahnradpumpe, oder eine Pendelschieberpumpe.

Bei einer beispielhaften Ausführungsform der Pumpe ist die Stellkammer über den Fluidkanal, insbesondere den ersten Fluidkanal und/oder den zweiten Fluidkanal, fluidkommunizierend mit dem Steuerventil verbunden.

Befindet sich der Kolben des Steuerventils in der ersten oder der zweiten Kolbenposition, kann die Förderleistung der Pumpe abfallen. Beispielsweise kann das Fluid über das Steuerventil in die Stellkammer der Pumpe einströmen und in der Stellkammer einen Fluiddruck erzeugen, wenn sich der Kolben des Steuerventils in der ersten oder der zweiten Kolbenposition befindet. Die Pumpe kann eine minimale Förderleistung aufweisen, wenn sich der Kolben des Steuerventils in der ersten oder der zweiten Kolbenposition befindet. Der Fluidraum, insbesondere der erste Fluidraum, ist vorzugsweise mit dem Hochdruckbereich der Pumpe fluidisch verbunden.

Befindet sich der Kolben des Steuerventils in der vierten oder der fünften Kolbenposition, kann die Förderleistung der Pumpe ansteigen. Beispielsweise kann das Fluid in der ersten oder zweiten Kolbenposition aus der Stellkammer der Pumpe über das Steuerventil abfließen. Die Pumpe kann eine maximale Förderleistung erbringen, wenn sich der Kolben des Steuerventils in der vierten oder der fünften Kolbenposition befindet. Der zweite Fluidraum ist vorzugsweise mit dem Niederdruckbereich der Pumpe, insbesondere einem Fluidreservoir, fluidisch verbunden.

Vorzugsweise wird das Ventilgehäuse des Steuerventils durch das Pumpengehäuse der Pumpe gebildet.

Die Pumpen ist insbesondere für den Einsatz in einem Kraftfahrzeug vorgesehen. Dementsprechend kann die Pumpe als Kraftfahrzeugpumpe ausgebildet sein. Die Pumpe ist vorzugsweise zur Förderung einer Flüssigkeit, insbesondere eines Schmier-, Kühl- und/oder Betätigungsmittels, vorgesehen. Dementsprechend kann die Pumpe als Flüssigkeitspumpe ausgebildet sein. Die Pumpe ist vorzugsweise zur Versorgung, Schmierung und/oder Kühlung eines Kraftfahrzeugantriebs, insbesondere eines Kraftfahrzeugmotors, oder eines Kraftfahrzeuggetriebes vorgesehen. Vorzugsweise ist die Flüssigkeit als Öl, insbesondere als Motorschmieröl oder Getriebeöl, ausgeführt. Die Pumpe kann als eine Motorschmiermittelpumpe für ein Kraftfahrzeug oder als eine Getriebepumpe für ein Kraftfahrzeug ausgebildet sein.

Auch in den nachstehend formulierten Aspekten werden Merkmale der Erfindung beschrieben. In den Aspekten offenbarte Merkmale können die Ansprüche und auch die vorstehend beschriebenen Merkmale ergänzenoder Alternativen zu einzelnen Merkmalen aufzeigen. In Klammern gesetzte Bezugszeichen beziehen sich auf nachfolgend in Figuren illustrierte Ausführungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.

Aspekt 1: Steuerventil (1) für eine Pumpe zur Förderung eines Fluids, das Steuerventil (1) umfassend:
(a) ein Ventilgehäuse (2), welches eine Kolbenkammer (4) begrenzt,
(b) einen Kolben (5), der innerhalb der Kolbenkammer (4) bewegbar ist, ,
(c) einen Fluidkanal (12), der mit einer Mündungsöffnung (17) in die Kolbenkammer (4) mündet, wobei
(d) die Mündungsöffnung (17) eine Mündungssteuerkante (20, 23) definiert,
(e) das Ventilgehäuse (2) eine Vertiefung (6) umfasst, die sich in den Fluidkanal (12) erstreckt und die Vertiefung (6) eine zur Mündungssteuerkante (20, 23) axial versetzte Vertiefungssteuerkante (21, 24) definiert, oder
(f) das Ventilgehäuse (2) eine Vertiefung (6) umfasst, die sich in den Fluidkanal (12) erstreckt und die Vertiefung (6) eine zur Mündungssteuerkante (20, 23) axial versetzte Vertiefungssteuerkante (21, 24) definiert und der Kolben (5) eine Kolbenvertiefung (25) umfasst, die eine Kolbenvertiefungssteuerkante (22) definiert,
   dadurch gekennzeichnet, dass
(g) in einer Schnittansicht der Kolbenkammer (4) die Vertiefungssteuerkante (21, 24) gemeinsam mit einer Flucht der Vertiefungssteuerkante (21, 24) eine Sekante in Bezug auf den Außenumfang der Mündungsöffnung (17) bildet.

Aspekt 2: Steuerventil (1) nach dem vorhergehenden Aspekt, dadurch gekennzeichnet, dass der Kolben (5), der innerhalb der Kolbenkammer (4) entlang seiner Längsachse (L) axial bewegbar ist.

Aspekt 3: Steuerventil (1) nach einem der vorhergehenden Aspekte, dadurch gekennzeichnet, dass die Vertiefung (6) die Querschnittsfläche der Kolbenkammer (4) innerhalb der axialen Erstreckung der Mündungsöffnung (17) vergrößert.

Aspekt 4: Steuerventil (1) nach einem der vorhergehenden Aspekte, dadurch gekennzeichnet, dass die Mündungssteuerkante (20, 23) und die Vertiefungssteuerkante (21, 24) so axial zueinander versetzt sind, dass eine Kolbensteuerkante (15, 16) des Kolbens (5) in einer ersten Kolbenposition die Mündungssteuerkante (20, 23) negativ überdeckt und die Vertiefungssteuerkante (21, 24) positiv überdeckt oder zur Vertiefungssteuerkante (21, 24) eine Nullüberdeckung aufweist.

Aspekt 5: Steuerventil (1) nach Aspekt 4, dadurch gekennzeichnet, dass die Mündungssteuerkante (20, 23) und die Vertiefungssteuerkante (21, 24) so axial zueinander versetzt sind, dass die Kolbensteuerkante (15, 16) die Mündungssteuerkante (20, 23) und die Vertiefungssteuerkante (21, 24) in einer zweiten Kolbenposition negativ überdeckt.

Aspekt 6: Steuerventil (1) nach einem der vorhergehenden Aspekte, dadurch gekennzeichnet, dass ein vom Kolben (5) und vom Ventilgehäuse (2) begrenzter Fluidraum (10, 11) in der ersten Kolbenposition mit dem Fluidkanal (12) fluidkommunizierend verbunden ist und eine unmittelbare Fluidströmung zwischen dem Fluidraum (10, 11) und der Vertiefung (6) in der ersten Kolbenposition durch den Kolben (5) verhindert wird.

Aspekt 7: Steuerventil (1) nach Aspekt 6, dadurch gekennzeichnet, dass der Fluidraum (10, 11) in der zweiten Kolbenposition mit dem Fluidkanal (12) und der Vertiefung (6) fluidkommunizierend verbunden ist.

Aspekt 8: Steuerventil (1) nach einem der Aspekte 6 oder 7, dadurch gekennzeichnet, dass der Strömungsquerschnitt der Mündungsöffnung (17) in der ersten und/oder in der zweiten Kolbenposition durch den Kolben (5) auf einen effektiven Strömungsquerschnitt reduziert wird und die Vertiefung (6) nur in der zweiten Kolbenposition eine Vergrößerung des effektiven Strömungsquerschnittes bewirkt.

Aspekt 9: Steuerventil (1) nach einem der Aspekte 6 bis 8, dadurch gekennzeichnet, dass der Kolben (5) den Fluidraum (10, 11) in einer dritten Kolbenposition vom ersten Fluidkanal (12) und von der Vertiefung (6) fluidisch trennt.

Aspekt 10: Steuerventil (1) nach einem der vorhergehenden Aspekte, dadurch gekennzeichnet, dass die Mündungssteuerkante (20, 23) und die Vertiefungssteuerkante (21, 24) so axial zueinander versetzt sind, dass die Kolbensteuerkante (15, 16) des Kolbens (5) die Mündungssteuerkante (20, 23) und die Vertiefungssteuerkante (21, 24) in einer dritten Kolbenposition positiv überdeckt.

Aspekt 11: Steuerventil (1) nach einem der vorhergehenden Aspekte, wobei durch die Vertiefung (6) die dem Kolben (5) zugewandten Innenmantelfläche (3) des Ventilgehäuses (2) von der Außenmantelfläche des Kolbens (5) beabstandet wird.

Aspekt 12: Steuerventil (1) nach einem der vorhergehenden Aspekte, dadurch gekennzeichnet, dass die Vertiefung (6) axial durch eine erste Vertiefungswand (7) und eine der ersten Vertiefungswand (7) gegenüberliegenden zweiten Vertiefungswand (8) begrenzt wird, wobei eine der Vertiefungswände (7, 8) die Vertiefungssteuerkante (21, 24) definiert.

Aspekt 13: Steuerventil (1) nach einem der vorhergehenden Aspekte, wobei sich die Vertiefung (6) zumindest teilweise über den Umfang der dem Kolben (5) zugewandten Innenmantelfläche (3) des Ventilgehäuses (2) erstreckt.

Aspekt 14: Steuerventil (1) nach einem der Aspekte 12 oder 13, dadurch gekennzeichnet, dass der axiale Abstand zwischen der ersten Vertiefungswand (7) und der zweiten Vertiefungswand (8) kleiner ist als der Durchmesser der Mündungsöffnung (17).

Aspekt 15: Steuerventil (1) nach einem der Aspekte 12 bis 14, dadurch gekennzeichnet, dass der axiale Abstand zwischen der ersten Vertiefungswand (7) und der zweiten Vertiefungswand (8) über den Umfang der Innenmantelfläche (3) des Ventilgehäuses (2) zumindest abschnittsweise konstant ist und/oder zumindest abschnittsweise variiert.

Aspekt 16: Steuerventil (1) nach einem der Aspekte 12 bis 15, dadurch gekennzeichnet, dass die Vertiefung (6) einen Vertiefungsgrund (9) aufweist, der einen radialen Abstand zur Innenmantelfläche (3) des Ventilgehäuses (2) aufweist und axial durch die erste Vertiefungswand (7) und die zweite Vertiefungswand (8) begrenzt wird.

Aspekt 17: Steuerventil (1) nach Aspekt 16, dadurch gekennzeichnet, dass der radiale Abstand des Vertiefungsgrundes (9) zur Innenmantelfläche (3) des Ventilgehäuses (2) über den Umfang der Innenmantelfläche (3) des Ventilgehäuses (2) zumindest abschnittsweise konstant ist und/oder zumindest abschnittsweise variiert.

Aspekt 18: Steuerventil (1) nach einem der vorhergehenden Aspekte, wobei die Vertiefung (6) eine Nut (6), vorzugsweise eine zur Kolbenkammer (4) hin offene, sichelförmige Nut (6), in der Innenmantelfläche (3) des Ventilgehäuses (2) ist.

Aspekt 19: Steuerventil (1) nach einem der vorhergehenden Aspekte, dadurch gekennzeichnet, dass die Kolbenvertiefung (25) eine Vertiefung (25), vorzugsweise eine Nut (25), in der Außenumfangsfläche des Kolbens (5) ist, wobei die Kolbenvertiefung (25) eine axiale Begrenzungswand (27) aufweist, welche die Kolbenvertiefungssteuerkante (23) bildet, und der Kolben (5) einen Durchgang (26) aufweist, der sich axial von der Kolbenvertiefung (25) bis zu einer Stirnfläche (29) des Kolbens (5) erstreckt, wobei der Durchgang (26) einen engsten Strömungsquerschnitt aufweist, der kleiner ist als der Strömungsquerschnitt der Mündungsöffnung (17).

Aspekt 20: Steuerventil (1) nach einem der vorhergehenden Aspekte, dadurch gekennzeichnet, dass die Mündungsöffnung (17) eine erste Mündungssteuerkante (20) und eine zweite Mündungssteuerkante (23) definiert, die Vertiefung (6) eine erste Vertiefungssteuerkante (21) eine zweite Vertiefungssteuerkante (24) definiert und der Kolben (5) eine erste Kolbensteuerkante (15) und eine zweite Kolbensteuerkante (16) aufweist, wobei die zweite Mündungssteuerkante (23) und die zweite Vertiefungssteuerkante (24) axial so zueinander versetzt sind, dass die zweite Kolbensteuerkante (16) in einer vierten Kolbenposition die zweite Mündungssteuerkante (23) negativ überdeckt und die zweite Vertiefungssteuerkante (24) positiv überdeckt oder zur zweiten Vertiefungssteuerkante (24) eine Nullüberdeckung aufweist.

Aspekt 21: Steuerventil (1) nach Aspekt 20, dadurch gekennzeichnet, dass die zweite Vertiefungssteuerkante (24) gemeinsam mit einer Flucht der zweiten Vertiefungssteuerkante (24) in einer Schnittansicht der Kolbenkammer (4) eine Sekante in Bezug auf den Außenumfang der Mündungsöffnung (17) bildet.

Aspekt 22: Steuerventil (1) nach einem der Aspekte 20 oder 21, dadurch gekennzeichnet, dass die zweite Mündungssteuerkante (23) und die zweite Vertiefungssteuerkante (24) so axial zueinander versetzt sind, dass die zweite Kolbensteuerkante (16) die zweite Mündungssteuerkante (23) und die zweite Vertiefungssteuerkante (24) in einer fünften Kolbenposition negativ überdeckt.

Aspekt 23: Steuerventil (1) nach einem der Aspekte 20 bis 22, dadurch gekennzeichnet, dass die zweite Kolbensteuerkante (16) die zweite Mündungssteuerkante (23) und die zweite Vertiefungssteuerkante (24) in der ersten, der zweiten und der dritten Kolbenposition positiv überdeckt und/oder dass die erste Kolbensteuerkante (16) die Mündungssteuerkante (20) und die Vertiefungssteuerkante (21) in der vierten und der fünften Kolbenposition positiv überdeckt.

Aspekt 24: Steuerventil (1) nach einem der vorhergehenden Aspekte, dadurch gekennzeichnet, dass das Ventilgehäuse (2) und der Kolben (5) einen ersten Fluidraum (10) und einen zweiten Fluidraum (11) begrenzen, wobei der zweite Fluidraum (11) durch den Kolben (5) vom ersten Fluidraum (10) fluidisch getrennt wird.

Aspekt 25: Steuerventil (1) nach Aspekt 24, dadurch gekennzeichnet, dass das Volumen des ersten Fluidraums (10) unabhängig von der Kolbenposition des Kolbens (5) konstant ist und/oder das Volumen des zweiten Fluidraums (11) in Abhängigkeit der Kolbenposition veränderlich ist.

Aspekt 26: Steuerventil (1) nach einem der Aspekte 24 oder 25, dadurch gekennzeichnet, dass der zweite Fluidraum (11) in der vierten Kolbenposition mit dem Fluidkanal (12) fluidkommunizierend verbunden ist und eine unmittelbare Fluidströmung zwischen dem zweiten Fluidraum (11) und der Vertiefung (6) in der vierten Kolbenposition durch den Kolben (5) verhindert wird.

Aspekt 27: Steuerventil (1) nach einem der Aspekte 24 bis 26, dadurch gekennzeichnet, dass der zweite Fluidraum (11) in einer fünften Kolbenposition mit dem ersten Fluidkanal (12) und der Vertiefung (6) fluidkommunizierend verbunden ist.

Aspekt 28: Steuerventil (1) nach einem der vorhergehenden Aspekte, dadurch gekennzeichnet, dass in dem zweiten Fluidraum (11) ein Ventilfederelement (19) angeordnet ist, welches eine erste Stellkraft auf den Kolben (5) ausübt.

Aspekt 29: Steuerventil (1) nach Aspekt 28, dadurch gekennzeichnet, dass die erste Stellkraft eine Bewegung des Kolbens (5) bewirkt, die zu einer Volumenvergrößerung des zweiten Fluidraums (11) führt.

Aspekt 30: Steuerventil (1) nach einem der vorhergehenden Aspekte, dadurch gekennzeichnet, dass der Kolben (5) eine zweite Stirnfläche (28) aufweist, über welche ein elektromagnetisch angetriebener Steuerkolben und/oder ein Stelldruck eines Steuerfluids eine zweite Stellkraft auf den Kolben (5) ausübt, die eine Bewegung des Kolbens (5) bewirkt, welche zu einer Volumenverkleinerung des zweiten Fluidraums (11) führt.

Aspekt 31: Steuerventil (1) nach einem der vorhergehenden Aspekte, dadurch gekennzeichnet, dass das Steuerventil einen ersten Fluidkanal (12) und einen zusätzlichen zweiten Fluidkanal (13) umfasst, wobei der zweite Fluidkanal (13) in die Vertiefung (6), vorzugsweise in den Vertiefungsgrund (9) nach Aspekt 16, mündet.

Aspekt 32: Steuerventil (1) nach Aspekt 31, dadurch gekennzeichnet, dass die Vertiefung (6), vorzugsweise ein durch die Vertiefung (6) gebildeter Durchgang (14), den ersten Fluidkanal (12) mit dem zweiten Fluidkanal (13) fluidkommunizierend verbindet, vorzugsweise unabhängig von der Kolbenposition fluidkommunizierend verbindet.

Aspekt 33: Steuerventil (1) nach einem der vorhergehenden Aspekte, dadurch gekennzeichnet, dass die Mündungsöffnung (17) eine erste Mündungssteuerkante (20) und eine zweite Mündungssteuerkante (23) definiert und die Vertiefung (6) eine erste Vertiefungssteuerkante (21) eine zweite Vertiefungssteuerkante (24) definiert, wobei die zweite Mündungssteuerkante (23) und die zweite Vertiefungssteuerkante (24) axial überlappen und gemeinsam eine Gehäusesteuerkante (23, 24) bilden.

Aspekt 34: Pumpe (30) zur Förderung eines Fluids, die Pumpe (30) umfassend:
(a) ein eine Pumpenkammer (36) begrenzendes Pumpengehäuse (31), wobei die Pumpenkammer (36) in einem Niederdruckbereich einen Pumpenkammereinlass (33) und in einem Hochdruckbereich einen Pumpenkammerauslass (34) für das zu fördernde Fluid aufweist,
(b) einen Förderrotor (35), der in der Pumpenkammer (36) angeordnet ist und um eine Rotationsachse (R) drehbar ist, um das Fluid von dem Niederdruckbereich zum Hochdruckbereich zu fördern,
(c) ein Verstellorgan (37), um das Fördervolumen der Pumpe (30) zu verstellen, wobei zwischen dem Verstellorgan (37) und dem Pumpengehäuse (31) eine Stellkammer (38) zum Verstellen des Verstellorgans (37) ausgebildet ist, und
(d) ein Steuerventil (1) nach einem der vorhergehenden Aspekte, zur Steuerung eines Fluiddrucks in der Stellkammer (38).

Aspekt 35: Pumpe (30) nach Aspekt 34, wobei die Stellkammer (38) über den ersten Fluidkanal (12) und/oder den zweiten Fluidkanal (13) mit dem Steuerventil (1) verbunden ist.

Aspekt 36: Pumpe (30) nach einem der Aspekte 34 oder 35 in Kombination mit einem der Aspekte 6 oder 9, wobei die Pumpe (30) eine minimale Förderleistung erbringt oder die Förderleistung der Pumpe (30) abnimmt, wenn sich der Kolben in der ersten oder der zweiten Kolbenposition befindet.

Aspekt 37: Pumpe (30) nach einem der Aspekte 34 bis 36 in Kombination mit einem der Aspekte 22 oder 27, wobei die Pumpe (30) eine maximale Förderleistung aufweist oder die Förderleistung der Pumpe (30) zunimmt, wenn sich der Kolben in der vierten oder fünften Kolbenposition befindet.

Aspekt 38: Pumpe (30) nach einem der Aspekte 34 bis 37, wobei das Ventilgehäuse (2) durch das Pumpengehäuse (31) gebildet ist.

Aspekt 39: Pumpe (30) nach einem Aspekte 34 bis 38, wobei die Pumpe (30) als Kraftfahrzeugpumpe ausgebildet ist und/oder dazu geeignet ist in einem Fluidversorgungssystem für einen Kraftfahrzeugmotor und/oder für ein Kraftfahrzeuggetriebe verwendet zu werden.

Die hierin beschriebenen Merkmale können miteinander kombiniert werden, soweit dies technisch sinnvoll und geeignet ist. Weitere Merkmale, Merkmalskombinationen und Vorteile der Erfindung ergeben sich aus der nachfolgenden Beschreibung von Ausführungsbeispielen anhand der Figuren. Es zeigen:
- Figur 1: Eine perspektivische Schnittdarstellung eines Ausführungsbeispiels einer Pumpe mit einem erfindungsgemäßen Steuerventil;
- Figur 2: eine Schnittdarstellung der in Figur 1 gezeigten Pumpe;
- Figur 3: eine zweite Schnittdarstellung der in Figur 1 gezeigten Pumpe;
- Figur 4: eine schematische Schnittdarstellung eines Ausführungsbeispiels einer Kolbenkammer eines erfindungsgemäßen Steuerventils;
- Figur 5: eine zweite schematische Schnittdarstellung der in Figur 4 gezeigten Kolbenkammer;
- Figur 6: eine schematische Schnittdarstellung eines Ausführungsbeispiels eines Steuerventils mit der in Figur 4 gezeigten Kolbenkammer in einer ersten Kolbenposition;
- Figur 7: eine schematische Schnittdarstellung des Steuerventils gemäß Figur 6 in einer zweiten Kolbenposition;
- Figur 8: eine Schnittdarstellung des in Figur 1 gezeigten Steuerventils in der zweiten Kolbenposition;
- Figur 9: eine schematische Schnittdarstellung des Steuerventils gemäß Figur 6 in einer dritten Kolbenposition;
- Figur 10: eine schematische Schnittdarstellung des Steuerventils gemäß Figur 6 in einer vierten Kolbenposition;
- Figur 11: eine schematische Schnittdarstellung des Steuerventils gemäß Figur 6 in einer fünften Kolbenposition;
- Figur 12: eine Schnittdarstellung des in Figur 1 gezeigten Steuerventils in der fünften Kolbenposition;
- Figur 13: eine schematische Schnittdarstellung eines Ausführungsbeispiels eines erfindungsgemäßen Kolbens;
- Figur 14: eine Seitenansicht des in Figur 13 gezeigten Kolbens.

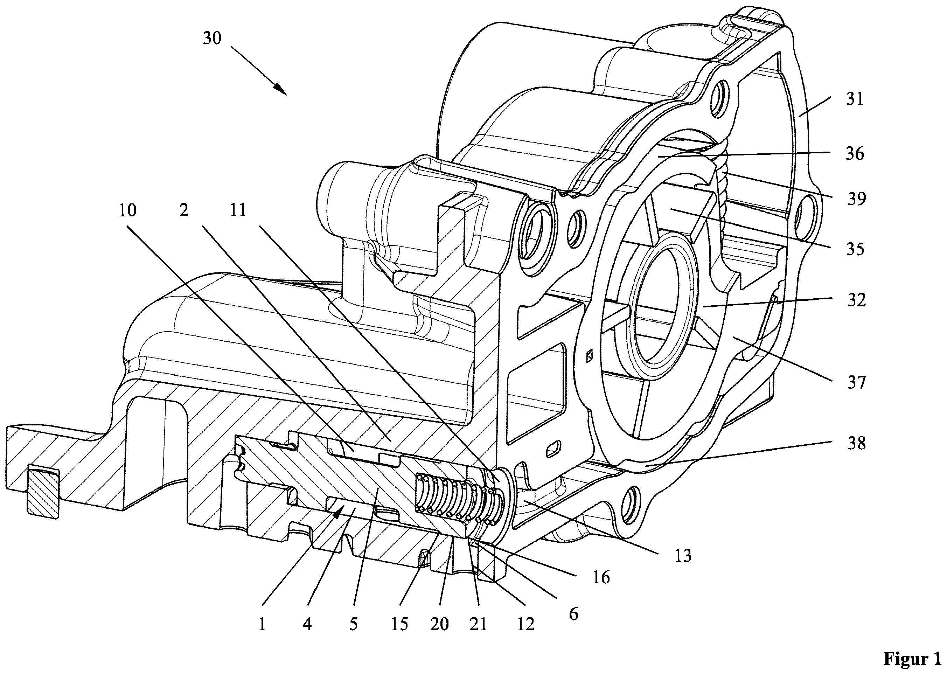

Figur 1 zeigt eine perspektivische Schnittdarstellung eines Ausführungsbeispiels einer Pumpe 30 mit einem erfindungsgemäßen Steuerventil 1.

Die Pumpe 30 ist als Rotationspumpe 30, insbesondere als Flügelzellenpumpe 30, ausgebildet und umfasst ein Pumpengehäuse 31. Das Pumpengehäuse 31 begrenzt eine Pumpenkammer 36 in der ein, vorzugsweise schwenkbares, Verstellorgan 37 und ein drehbarer Förderrotor 35 angeordnet sind. Der Förderroter 35 umfasst mehrere über den Umfang des Förderrotors 35 verteilte Flügel, wobei immer zwei benachbarte Flügel gemeinsam mit der Außenmantelfläche des Förderrotors 35 und der Innenmantelfläche des Verstellorgans 37 jeweils eine Förderkammer 32 begrenzen.

Das Verstellorgan 37 kann innerhalb der Pumpenkammer 36 so verschwenkt werden, dass das Verstellorgan 37 gegenüber der Rotationsachse des Förderrotors 35 eine veränderliche Exzentrizität aufweist. Über die Exzentrizität des Verstellorgans 37 gegenüber der Rotationsachse des Förderrotors 35 kann das Fördervolumen der Pumpe 30 reguliert werden. Eine maximale Exzentrizität hat im Betrieb der Pumpe 30 eine maximale Förderleistung der Pumpe 30 zur Folge. Ein Pumpenfederelement 39 drückt das Verstellorgan 37 in eine erste Position, bei der das Verstellorgan 37 in Bezug auf den Förderrotor 35 eine maximale Exzentrizität aufweist.

Zum Verschwenken des Verstellorgans 37 aus der ersten Position in eine zweite Position, insbesondere um die Exzentrizität des Verstellorgans 37 gegenüber dem Förderrotors 35 zu verringern, ist zwischen der Innenmantelfläche des Pumpengehäuses 31 und der Außenmantelfläche des Verstellorgans 37 mindestens eine Stellkammer 38 vorgesehen. Wird die Stellkammer 38 mit einem Fluiddruck beaufschlagt, drückt der Fluiddruck das Verstellorgan 37 gegen die Federkraft des Pumpenfederelements 39 in die zweite Position. Mit abnehmender Exzentrizität des Verstellorgans 37 gegenüber der Rotationsachse des Förderrotors 35 nimmt die Förderleistung der Pumpe 30 ab.

In dem in Figur 1 dargestellten Ausführungsbeispiel bildet das Pumpengehäuse 31 gleichzeitig auch ein Ventilgehäuse 2 für ein Steuerventil 1. Das Pumpengehäuse 31 bzw. das Ventilgehäuse 2 begrenzt eine Kolbenkammer 4. Innerhalb der Kolbenkammer 4 ist ein entlang seiner Längsachse axial bewegbarer Kolben 5 angeordnet. Gemeinsam mit dem Ventilgehäuse 2 begrenzt der Kolben 5 einen ersten Fluidraum 10 und einen zweiten Fluidraum 11.

Ein erster Fluidkanal 12, der wie in Figur 1 gezeigt von unten in die Kolbenkammer 4 münden kann, definiert an der Mündungsöffnung zur Kolbenkammer 4 eine erste Mündungssteuerkante 20 des Steuerventils 1. Der erste Fluidkanal 12 ist im dargestellten Ausführungsbeispiel der Pumpe 30 als Bohrung ausgeführt. Im vollständig montierten Zustand der Pumpe 30 kann der Fluidkanal 12 als Blindkanal ausgebildet sein. Das heißt, dass der Fluidkanal 12 bis auf die Mündungsöffnung zur Kolbenkammer 4 keine weitere Mündungsöffnung aufweist und insbesondere in Bezug auf die Umgebung der Pumpe 30 fluiddicht abgeschlossen ist. Bei alternativen Ausführungsbeispielen kann der Fluidkanal 12 mit der Stellkammer 38, einer weiteren Stellkammer und/oder der Umgebung fluidkommunizierend verbunden sein.

Eine Vertiefung 6 in dem Ventilgehäuse 2 bildet eine erste Vertiefungssteuerkante 21, welche in Bezug auf die erste Mündungssteuerkante 20 einen axialen Versatz aufweist. Die erste Mündungssteuerkante 20 und die erste Vertiefungssteuerkante 21 sind als Gehäusesteuerkanten 20, 21 ausgebildet. Die Vertiefung 6 erstreckt sich dabei so über den Umfang des Ventilgehäuses 2, dass die Vertiefungen 6 in den ersten Fluidkanal 12 mündet bzw. sich in den ersten Fluidkanal 12 erstreckt.

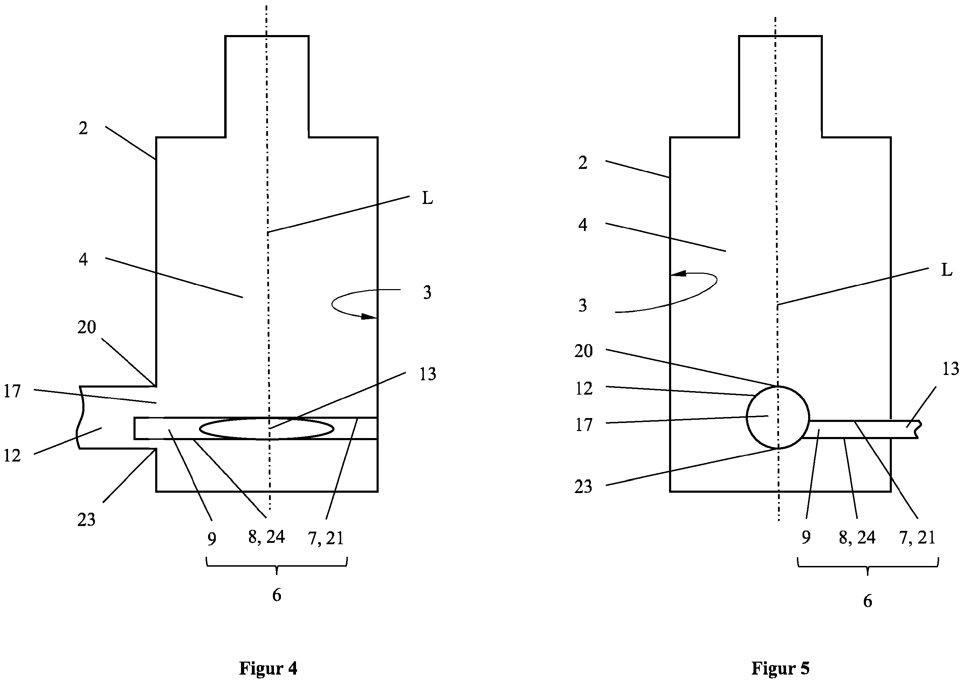

Der Kolben 5 umfasst im dargestellten Ausführungsbeispiel eine erste Kolbensteuerkante 15 und eine zweite Kolbensteuerkante 16. Eine Bewegung des Kolbens 5 entlang seiner Längsachse führt insbesondere zu einer Veränderung der axialen Beabstandung zwischen der erste Kolbensteuerkante 15 und den Gehäusesteuerkanten 20, 21, was eine besonders vorteilhafte Regulierung der Fluidströmung zwischen dem ersten Fluidraum 10 und dem ersten Fluidkanal 12 ermöglicht. Hinsichtlich der konkreten Funktionsweise des Steuerventils 1 wird auf die Figuren 4-12 und die dazugehörigen Figurenbeschreibungen verwiesen.

Ein zweiter Fluidkanal 13 verbindet die Stellkammer 38 mit der Vertiefung 6 des Steuerventils 1 fluidkommunizierend. Da sich die Vertiefung 6 in den ersten Fluidkanal 12 erstreckt, steht der zweite Fluidkanal 13 unabhängig von der Position des Kolbens 5 in fluidkommunizierender Verbindung mit dem ersten Fluidkanal 12. Die Vertiefung 6 bildet zwischen dem ersten Fluidkanal 12 und dem zweiten Fluidkanal 13 einen Bypass.

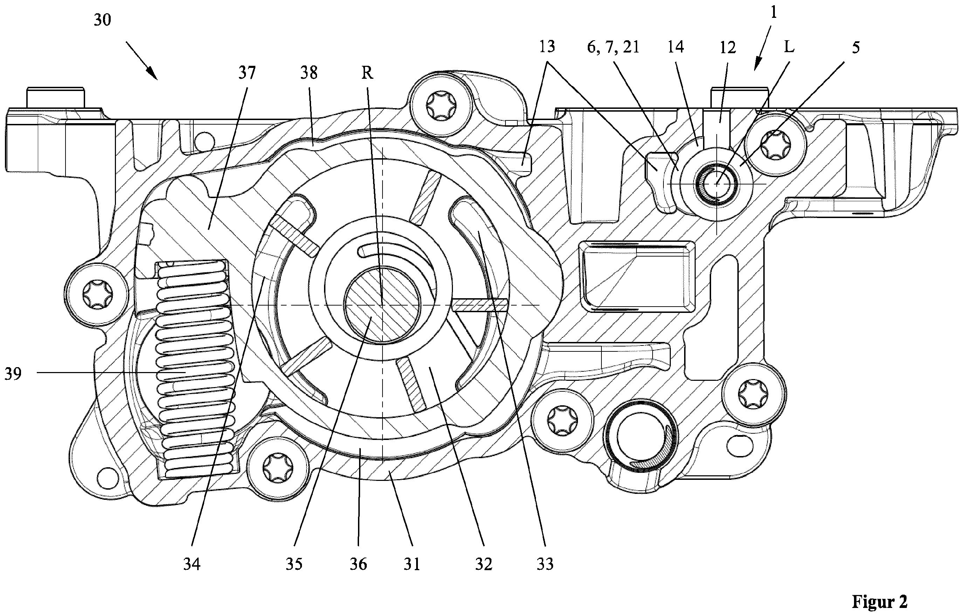

Figur 2 zeigt eine seitliche Schnittdarstellung der Pumpe 30 aus Figur 1. Wie dargestellt münden ein Pumpenkammereinlass 33 und ein Pumpenkammerauslass 34 so in die Pumpenkammer 36, dass bei einer Rotation des Förderrotors 35 um die Rotationsachse R ein zu förderndes Fluid durch die Förderkammern 32 vom Pumpenkammereinlass 33 zum Pumpenkammerauslass 34 gefördert wird. Befindet sich das Verstellorgan 37 in der ersten Position (Position mit maximaler Exzentrizität in Bezug auf die Rotationsachse R des Förderrotors 35) vergrößert sich das Volumen der Förderkammern 32 im Bereich des Pumpenkammereinlass 33 (Niederdruckbereich der Pumpenkammer) in Drehrichtung. Im Bereich des Pumpenkammerauslasses 34 (Hochdruckbereich der Pumpenkammer) verringert sich das Volumen der Förderkammern 32. Befindet sich das Verstellorgan 37 in der zweiten Position (Position mit minimaler Exzentrizität in Bezug auf die Rotationsachse R des Förderrotors 35) bleibt das Volumen der Förderkammern 32 über den Umfang im Wesentlichen gleich.

Die Pumpe 30 definiert in einem Fluidkreislauf vorteilhafterweise die Grenze zwischen einem Niederdruckbereich und einem Hochdruckbereich. Der Hochdruckbereich der Pumpe 30 erstreckt sich vorzugsweise vom Hochdruckbereich der Pumpenkammer bis zu einem Abnehmer, insbesondere einem Verbraucher des unter hohem Druck stehendem Fluid. Der Niederdruckbereich der Pumpe erstreckt sich vorzugsweise vom Ausgang des Abnehmers, insbesondere einem Fluidausgang des Verbrauchers, bis zum Niederdruckbereich der Pumpenkammer. Der Niederdruckbereich der Pumpe 30 kann vorzugsweise ein Fluidreservoir für das zu fördernde Fluid umfassen.

Das Pumpenfederelement 39 drückt das Verstellorgan 37 in die in Figur 2 gezeigte erste Position, bei welcher das Verstellorgan 37 eine maximale Exzentrizität in Bezug auf die Rotationsachse R des Förderrotors 35 aufweist. Wird die Stellkammer 38 mit einem Fluiddruck beaufschlagt, drückt der Fluiddruck in der Stellkammer 38 das Verstellorgan 37 gegen die vom Pumpenfederelement 39 ausgeübte Federkraft in die zweite Position.

Die Stellkammer 38 ist über den zweiten Fluidkanal 13 mit dem Steuerventil 1 verbunden. Der zweite Fluidkanal 13 mündet in die Vertiefung 6, die einen Durchgang 14 zum ersten Fluidkanal 12 bildet. In der in Figur 2 gewählten Schnittansicht wird eine erste Vertiefungswand 7 der Vertiefung 6 gezeigt, wobei die dem Kolben 5 zugewandte Kante der ersten Vertiefungswand 7 die erste Vertiefungssteuerkante 21 des Steuerventils 1 bildet. Hinsichtlich der konkreten Funktionsweise des Steuerventils 1 wird auf die Figuren 4-12 und die dazugehörigen Figurenbeschreibungen verwiesen.

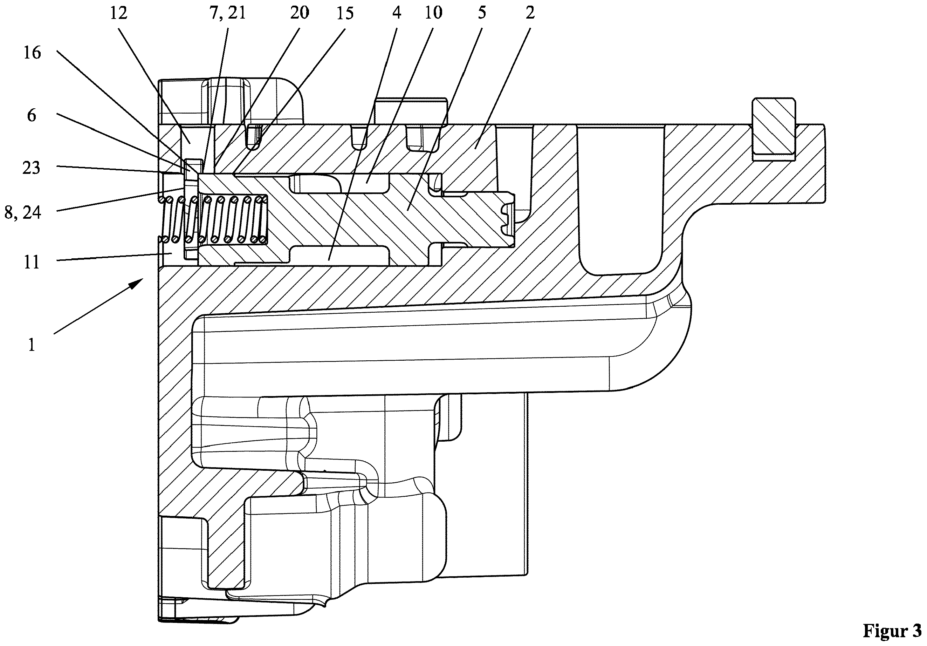

Figur 3 zeigt eine Schnittdarstellung entlang der Längsachse des Steuerventils 1 der in Figur 1 dargestellten Pumpe 30.

Das Ventilgehäuse 2 des Steuerventils 1 bildet die Kolbenkammer 4 in der der Kolben 5 entlang seiner Längsachse bewegbar angeordnet ist. Gemeinsam mit dem Ventilgehäuse 2 begrenzt der Kolben 5 den ersten Fluidraum 10 und den zweiten Fluidraum 11.

Der erster Fluidkanal 12, der radial in die Kolbenkammer 4 mündet, bildet mit der Innenmantelfläche der Kolbenkammer 4 die erste Mündungssteuerkante 20 und eine zweite Mündungssteuerkante 23. Die Vertiefung 6 des Ventilgehäuses 2 bildet mit ihrer in Figur 3 rechts gezeigten ersten Vertiefungswand 7 die erste Vertiefungssteuerkante 21. Mit der in Figur 3 links gezeigten zweiten Vertiefungswand 8 bildet die Vertiefung 6 die zweite Vertiefungssteuerkante 24. Der Kolben 5 weist eine dem ersten Fluidraum 10 zugewandte erste Kolbensteuerkante 15 und eine dem zweiten Fluidraum 11 zugewandte zweite Kolbensteuerkante 16 auf.

In der in Figur 3 dargestellten Kolbenposition befindet sich die erste Kolbensteuerkante 15 rechts von der ersten Mündungssteuerkante 20 und der ersten Vertiefungssteuerkante 21. Dementsprechend weist die erste Kolbensteuerkante 15 gegenüber der ersten Mündungssteuerkante 20 und der ersten Vertiefungssteuerkante 21 eine positive Überdeckung auf. Das heißt, dass der erste Fluidraum 10 weder mit dem ersten Fluidkanal 12 noch mit der Vertiefung 6 fluidkommunizierend verbunden ist.

Figur 4 zeigt eine schematische Schnittdarstellung von einer Kolbenkammer 4 eines Ausführungsbeispiels des erfindungsgemäßen Steuerventils. Die Kolbenkammer 4 wird durch ein Ventilgehäuse 2 gebildet. Vorzugsweise weist die Kolbenkammer 4 eine kreiszylindrische Form auf, wobei eine Innenmantelfläche 3 des Ventilgehäuses 2 die Kolbenkammer 4 radial begrenzt.

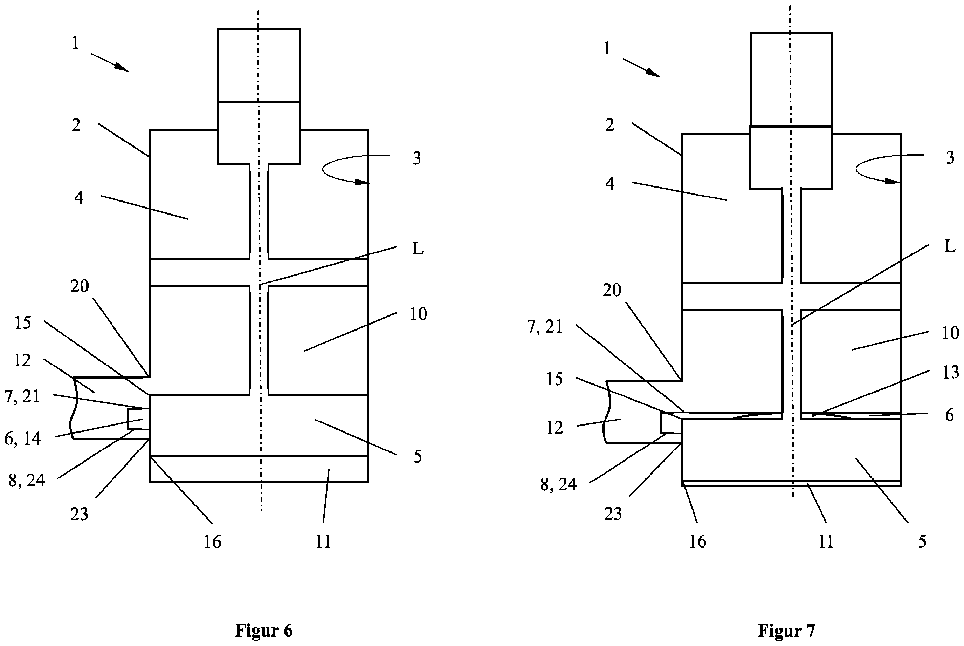

Im linken Bereich der Figur 4 ist ein erster Fluidkanal 12 abgebildet, der über eine Mündungsöffnung 17 in die Kolbenkammer 4 mündet. Der Fluidkanal 12 bildet an seiner Mündungsöffnung 17 gemeinsam mit der Innenmantelfläche 3 des Ventilgehäuses 2 eine erste Mündungssteuerkante 20 und eine zweite Mündungssteuerkante 23. Die Mündungssteuerkanten 20, 23 bestimmen in Abhängigkeit einer Kolbenposition eines in Figur 4 nicht abgebildeten Kolbens, inwiefern der Fluidkanal 12 fluidkommunizierend mit der Kolbenkammer 4 verbunden ist. Diesbezüglich wird auf die Beschreibung der Figuren 6-12 verwiesen.

Das Ventilgehäuse 2 umfasst eine Vertiefung 6, welche als radiale Vertiefung 6 der Innenmantelfläche 3 ausgebildet ist. Die Vertiefung 6 wird in Bezug auf die Längsachse L radial durch einen Vertiefungsgrund 9 und axial durch eine erste Vertiefungswand 7 und einer der ersten Vertiefungswand 7 gegenüberliegenden zweiten Vertiefungswand 8 begrenzt. Die erste Vertiefungswand 7 definiert eine erste Vertiefungssteuerkante 21. Die zweite Vertiefungswand 8 definiert eine zweite Vertiefungssteuerkante 24.

Die erste Vertiefungssteuerkante 21 ist in Bezug auf die Längsachse L der Kolbenkammer 4 axial zwischen der ersten Mündungssteuerkante 20 und der zweiten Mündungssteuerkante 23 angeordnet. Die axiale Beabstandung der ersten Vertiefungssteuerkante 21 von der ersten Mündungssteuerkante 20 ist vorzugsweise kleiner als die axiale Beabstandung der ersten Vertiefungssteuerkante 21 von der zweiten Mündungssteuerkante 23. Die erste Vertiefungssteuerkante 21 erstreckt sich auf der Höhe des ersten Fluidkanals 12 in Umfangsrichtung, so dass die Vertiefung 6 in den ersten Fluidkanal 12 mündet. Anders formuliert wird die Querschnitttsfläche der Mündungsöffnung 17 durch die Vertiefung 6 vergrößert. Dies bewirkt vorteilhafter Weise, dass in Abhängigkeit der Kolbenposition des nicht dargestellten Kolbens der effektive Strömungsquerschnitt der Mündungsöffnung 17 über die erste Vertiefungssteuerkante 21 sprunghaft vergrößert werden kann. Es wird insbesondere auf die Beschreibung der Figuren 6 und 7 verwiesen.

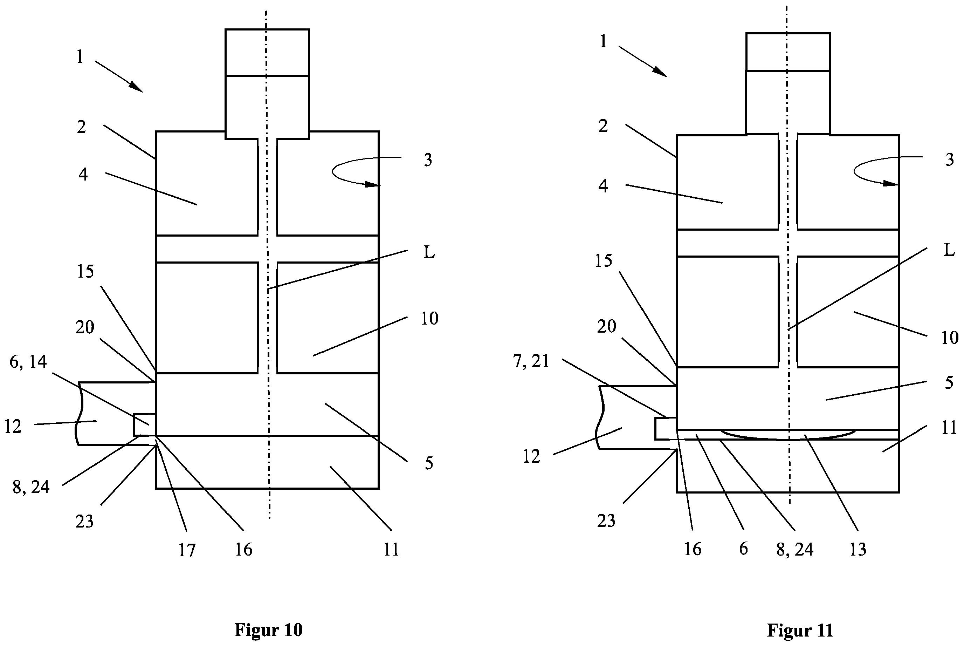

Die zweite Vertiefungssteuerkante 24 ist in Bezug auf die Längsachse L der Kolbenkammer 4 axial zwischen der ersten Mündungssteuerkante 20 und der zweiten Mündungssteuerkante 23 angeordnet. Die axiale Beabstandung der zweiten Vertiefungssteuerkante 24 von der ersten Mündungssteuerkante 20 ist größer als die axiale Beabstandung der ersten Vertiefungssteuerkante 21 von der ersten Mündungssteuerkante 20. Dementsprechend ist die axiale Beabstandung der zweiten Vertiefungssteuerkante 24 von der zweiten Mündungssteuerkante 23 kleiner als die axiale Beanstandung der ersten Vertiefungssteuerkante 21 von der zweiten Mündungssteuerkante 23. Die zweite Vertiefungssteuerkante 24 erstreckt sich auf der Höhe des Fluidkanals 12 in Umfangsrichtung, so dass die Vertiefung 6 in den Fluidkanal 12 mündet. Anders formuliert wird die Querschnitttsfläche der Mündungsöffnung 17 durch die Vertiefung 6 vergrößert. Dies bewirkt vorteilhafter Weise, dass in Abhängigkeit der Kolbenposition des nicht dargestellten Kolbens der effektive Strömungsquerschnitt der Mündungsöffnung 17 über die zweite Vertiefungssteuerkante 24 sprunghaft vergrößert werden kann. Es wird insbesondere auf die Beschreibung der Figuren 10 und 11 verwiesen.

Wie in Figur 4 gezeigt mündet ein zweiter Fluidkanal 13 in den Vertiefungsgrund 9 der Vertiefung 6. Die Mündungsöffnung des zweiten Fluidkanals 13 weist einen ovalen Querschnitt auf. Alternativ kann die Mündungsöffnung des zweiten Fluidkanals 13 beispielsweise auch kreisförmig, rechteckig oder mehreckig ausgebildet sein. Im dargestellten Ausführungsbeispiel ist der zweite Fluidkanal 13 in Bezug auf die Längsachse L um 90° in Umfangsrichtung zum ersten Fluidkanal 12 versetzt.

Figur 5 zeigt die Figur 4 dargestellte Kolbenkammer 4 in einer weiteren Schnittdarstellung. In Bezug auf die Darstellung in Figur 4 wurde die Kolbenkammer 4 für die Darstellung in Figur 5 um 90° im Uhrzeigersinn um die Längsachse L rotiert.

Bei dem gezeigten Ausführungsbeispiel erstreckt sich die Vertiefung 6 nur über einen Teil des Umfangs der Kolbenkammer 4. Bei weiteren Ausführungsbeispielen kann sich die Vertiefung 6 über den gesamten Umfang der Kolbenkammer 4 erstrecken.

Aufgrund der axialen Beabstandung der ersten Vertiefungssteuerkante 21 zur ersten Mündungssteuerkante 20 und/oder der axialen Beabstandung der ersten Vertiefungssteuerkante 21 zur zweiten Mündungssteuerkante 23, bildet die erste Vertiefungssteuerkante 21 bzw. die erste Vertiefungssteuerkante 21 gemeinsam mit einer imaginären Verlängerung der ersten Vertiefungssteuerkante 21, insbesondere einer Flucht der ersten Vertiefungssteuerkante 21, eine Sekante in Bezug auf die Mündungsöffnung 17 des Fluidkanals 12. Die erste Vertiefungssteuerkante 21 ist so von der ersten Mündungssteuerkante 20 und/oder der zweiten Mündungssteuerkante 23 beabstandet, dass die Vertiefungssteuerkante 21 in Bezug auf die Mündungsöffnung 17 keine Tangente oder Passante bildet.

Die zweite Vertiefungssteuerkante 24 ist so von der ersten Mündungssteuerkante 20 und/oder der zweiten Mündungssteuerkante 23 axial beabstandet, dass die zweite Vertiefungssteuerkante 24 bzw. die zweite Vertiefungssteuerkante 24 gemeinsam mit einer imaginären Verlängerung der zweiten Vertiefungssteuerkante 24, insbesondere einer Flucht der zweiten Vertiefungssteuerkante 24, eine Sekante in Bezug auf die Mündungsöffnung 17 des Fluidkanals 12 bildet. Die zweite Vertiefungssteuerkante 24 ist so von der ersten Mündungssteuerkante 20 und/oder der zweiten Mündungssteuerkante 23 beabstandet, dass die zweite Vertiefungssteuerkante 24 in Bezug auf die Mündungsöffnung 17 keine Tangente oder Passante bildet.

Figur 6 zeigt eine schematische Schnittdarstellung eines Steuerventils 1 mit einer Kolbenkammer 4, wie sie in Figur 4 abgebildet ist. Innerhalb der Kolbenkammer 4 ist ein Kolben 5 angeordnet, welcher entlang seiner Längsachse L axial bewegbar ist. Der Kolben 5 ist insbesondere in eine erste Bewegungsrichtung, im dargestellten Ausführungsbeispiel von oben nach unten, und in eine, der ersten Bewegungsrichtung entgegengesetzten, zweiten Bewegungsrichtung, nämlich von unten nach oben, bewegbar.

Der Kolben 5 weist eine erste Kolbensteuerkante 15 auf, die eine Kante des Kolbens 5 ist, welche sich über den Umfang des Kolbens 5 erstreckt und welche eine axiale Stirnfläche des Kolbens 5 mit der Außenumfangswand des Kolbens 5 verbindet. Ferner umfasst der Kolben 5 eine zweite Kolbensteuerkante 16.

Der Kolben 5 und das Ventilgehäuse 2 begrenzen einen ersten Fluidraum 10. Das Volumen des ersten Fluidraums 10 ist vorzugsweise konstant. Darüber hinaus begrenzen der Kolben 5 und das Ventilgehäuse 2 einen zweiten Fluidraum 11. Das Volumen des zweiten Fluidraums 11 ist im dargestellten Ausführungsbeispiel maßgeblich von der Position des Kolbens 5 in der Kolbenkammer 4, im Folgenden als Kolbenposition bezeichnet, abhängig.

In Figur 6 befindet sich der Kolben 5 in einer ersten Kolbenposition. Die erste Kolbensteuerkante 15 überdeckt in der ersten Kolbenposition die erste Mündungssteuerkante 20 negativ und die erste Vertiefungssteuerkante 21 positiv. Die erste Kolbenposition kann aber auch so definiert sein, dass sich die erste Kolbensteuerkante 15 mit der erste Vertiefungssteuerkante 21 in einer Nullüberdeckung steht. In der ersten Kolbenposition ist der erste Fluidraum 10 mit dem ersten Fluidkanal 12 fluidkommunizierend verbunden, wobei der Kolben 5 die Mündungsöffnung 17 des ersten Fluidkanals 12 zumindest teilweise überdeckt. Der Strömungsquerschnitt der Mündungsöffnung 17 wird durch den Kolben 5 auf einen effektiven Strömungsquerschnitt reduziert. Befindet sich der Kolben 5 in der ersten Kolbenposition, wird die Vertiefung 6 durch den Kolben 5 derart verdeckt, dass der erste Fluidraum 10 nicht unmittelbar mit der Vertiefung 6 fluidkommunizierend verbunden ist. Mit anderen Worten kann sich zwischen dem ersten Fluidraum 10 und der Vertiefung 6 kein unmittelbarer Fluidstrom ausbilden.

Der in Figur 6 durch den Kolben 5 verdeckter zweiter Fluidkanal 13 ist über die Vertiefung 6, insbesondere über den durch die Vertiefung 6 gebildeten Durchgang 14, mit dem ersten Fluidkanal 12 fluidkommunizierend verbunden. Dementsprechend kann ein Fluid in der ersten Kolbenposition vom ersten Fluidkanal 12 über den Durchgang 14 in den zweiten Fluidkanal 13 strömen oder vom zweiten Fluidkanal 13 über den Durchgang 14 in den ersten Fluidkanal 12 strömen. Mit anderen Worten bildet der Durchgang 14 einen Bypass zwischen dem ersten Fluidkanal 12 und dem zweiten Fluidkanal 13.

Wie in Figur 6 gezeigt, begrenzen der Kolben 5 und das Ventilgehäuse 2 den zweiten Fluidraum 11. In der ersten Kolbenposition ist die Mündungsöffnung 17 des ersten Fluidkanals 12 und die Vertiefung 6 so durch den Kolben 5 verdeckt, dass der zweite Fluidraum 11 weder mit dem ersten Fluidkanal 12 noch mit der Vertiefung 6 fluidkommunizierend verbunden ist. Die zweite Mündungssteuerkante 23 befindet sich in der ersten Kolbenposition axial zwischen der ersten Mündungssteuerkante 20 und der zweiten Kolbensteuerkante 16. Die zweite Kolbensteuerkante 16 überdeckt in der ersten Kolbenposition die zweite Mündungssteuerkante 23 und die zweite Vertiefungssteuerkante 25 positiv.

Das in Figur 7 schematisch dargestellte Steuerventil 1 entspricht dem in Figur 6 gezeigten Steuerventil 1, wobei sich der Kolben 5 in einer zweiten Kolbenposition befindet. Im Vergleich zur in Figur 6 dargestellten ersten Kolbenposition wurde der Kolben 5 in Figur 7 in die erste Bewegungsrichtung bewegt. Der Kolben 5 befindet sich in Figur 7 in einer ersten Endstellung, welche insbesondere der zweiten Kolbenposition entspricht.

In der zweiten Kolbenposition ist die erste Kolbensteuerkante 15 axial zwischen der ersten Vertiefungssteuerkante 21 und der zweiten Vertiefungssteuerkante 24 angeordnet. Anders formuliert befindet sich die erste Vertiefungssteuerkante 21 in der zweiten Kolbenposition axial zwischen der ersten Kolbensteuerkante 15 und der ersten Mündungssteuerkante 20. Die erste Kolbensteuerkante 15 überdeckt in der zweiten Kolbenposition die erste Mündungssteuerkante 20 und die erste Vertiefungssteuerkante 21 negativ. Der erste Fluidraum 10 ist in der zweiten Kolbenposition über die Vertiefung 6 und über die Mündungsöffnung 17 fluidkommunizierend mit dem ersten Fluidkanal 12 verbunden. Das heißt, dass sich in der zweiten Kolbenposition auch zwischen dem ersten Fluidraum 10 und der Vertiefung 6 ein unmittelbarer Fluidstrom ausbilden kann.

Im Betrieb des Steuerventil 1 bewirkt dies vorteilhafter Weise, dass wenn sich der Kolben 5 von der ersten Kolbenposition in die zweite Kolbenposition bewegt, der effektive Strömungsquerschnitt der Mündungsöffnung 17 nicht nur aufgrund der Hubbewegung des Kolbens vergrößert wird, sondern auch der Strömungsquerschnitt des Durchgangs 14 der Vertiefung 6 zum effektiven Strömungsquerschnitt beiträgt. Anders formuliert kann in der zweiten Kolbenposition das Fluid nicht nur über die Mündungsöffnung 17 zwischen dem ersten Fluidkanal 12 und dem ersten Fluidraum 10 hin und/oder her strömen, sondern zusätzlich auch über den Durchgang 14. Folglich wird durch das Steuerventil 1, beim Wechsel von der ersten Kolbenposition in die zweite Kolbenposition, schlagartig ein größerer Fluidstrom zwischen dem ersten Fluidkanal 12 und dem ersten Fluidraum 10 zugelassen.

In der zweiten Kolbenposition ist die Mündungsöffnung 17 des ersten Fluidkanals 12 und die Vertiefung 6 so durch den Kolben 5 verdeckt, dass der zweite Fluidraum 11 weder mit dem ersten Fluidkanal 12 noch mit der Vertiefung 6 fluidkommunizierend verbunden ist. Die zweite Mündungssteuerkante 23 befindet sich in der zweiten Kolbenposition axial zwischen der ersten Mündungssteuerkante 20 und der zweiten Kolbensteuerkante 16. Die zweite Kolbensteuerkante 16 überdeckt in der zweiten Kolbenposition die zweite Mündungssteuerkante 23 und die zweite Vertiefungssteuerkante 24 positiv.

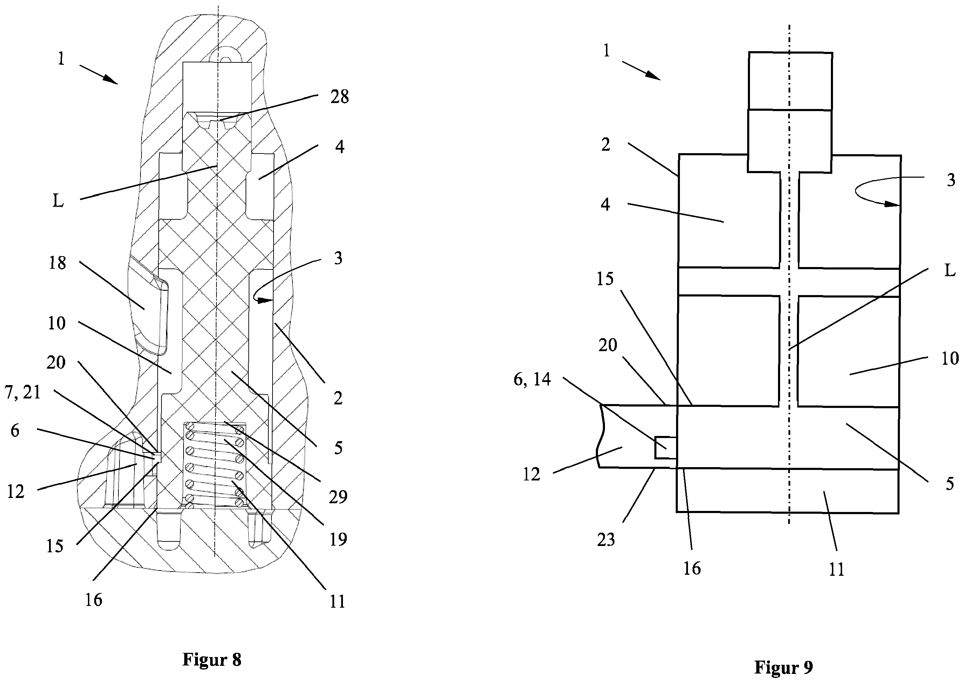

Figur 8 zeigt eine Schnittansicht des Steuerventils 1 gemäß dem in den Figuren 1-3 gezeigtem Steuerventil 1, wobei sich der Kolben 5 in der zweiten Kolbenposition befindet. Im gezeigten Ausführungsbeispiel entspricht die zweite Kolbenposition gleichfalls der ersten Endstellung des Kolbens 5. Der zweite Fluidraum 11 weist in der ersten Endstellung vorzugsweise ein minimales Volumen auf.

Im mittleren Bereich des in Figur 8 gezeigten Steuerventils 1 mündet ein dritter Fluidkanal 18 in die Kolbenkammer 4, insbesondere in den ersten Fluidraum 10. Vorzugsweise ist der dritte Fluidkanal 18 dauerhaft, insbesondere unabhängig von der Kolbenposition des Kolbens 5, mit dem ersten Fluidraum 10 fluidkommunizierend verbunden. Vorteilhafterweise verbindet der dritte Fluidkanal den ersten Fluidraum mit dem Hochdruckbereich der Pumpe 30.

Das in Figur 9 schematisch dargestellte Steuerventil 1 entspricht dem in Figur 6 gezeigten Steuerventil 1, wobei sich der Kolben 5 in einer dritten Kolbenposition befindet.

In der dritten Kolbenposition verdeckt der Kolben 5 die Mündungsöffnung 17 des ersten Fluidkanals 12 vollständig. Wie dargestellt überlappt die erste Kolbensteuerkante 15 axial mit der ersten Mündungssteuerkante 20 und die zweite Kolbensteuerkante 16 mit der zweiten Mündungssteuerkante 23. Alternativ können sich die Mündungssteuerkanten 20, 23 der Mündungsöffnung 17 auch axial zwischen den Kolbensteuerkanten 15, 16 befinden. Die erste Kolbensteuerkante 15 überdeckt in der dritten Kolbenposition die ersten Mündungssteuerkante 20 und die erste Vertiefungssteuerkante 21 positiv. In der dritten Kolbenposition ist der erste Fluidraum 10 weder mit dem ersten Fluidkanal 12 noch mit der Vertiefung 6 fluidkommunizierend verbunden. Selbiges gilt in der dritten Kolbenposition auch für den zweiten Fluidraum 11. Die zweite Kolbensteuerkante 16 überdeckt in der dritten Kolbenposition die zweite Mündungssteuerkante 23 und die zweite Vertiefungssteuerkante 24 positiv.

Das in Figur 10 schematisch dargestellte Steuerventil 1 entspricht dem in Figur 6 gezeigten Steuerventil 1, wobei sich der Kolben 5 in einer vierten Kolbenposition befindet.

In der vierten Kolbenposition befinden sich die erste Mündungssteuerkante 20, die erste Vertiefungssteuerkante 21 und die zweite Vertiefungssteuerkante 24 zwischen der ersten Kolbensteuerkante 15 und der zweiten Kolbensteuerkannte 16. Der erste Fluidraum 10 ist in der vierten Kolbenposition durch den Kolben 5 von dem ersten Fluidkanal 12 und der Vertiefung 6 fluidkommunizierend getrennt. Die erste Kolbensteuerkante 15 überdeckt in der vierten Kolbenposition die erste Mündungssteuerkante 20 und die erste Vertiefungssteuerkante 21 positiv.

Der erste Fluidkanal 12 ist in der vierten Kolbenposition über den durch die Vertiefung 6 gebildeten Durchgang 14 mit dem in Figur 10 durch den Kolben 5 verdeckten zweiten Fluidkanal 13 fluidkommunizierend verbunden. Dementsprechend kann ein Fluid in der vierten Kolbenposition vom ersten Fluidkanal 12 über den Durchgang 14 in den zweiten Fluidkanal 13 strömen oder vom zweiten Fluidkanal 13 über den Durchgang 14 in den ersten Fluidkanal 12 strömen. Mit anderen Worten bildet der Durchgang 14 einen Bypass zwischen dem ersten Fluidkanal 12 und dem zweiten Fluidkanal 13.

Die zweite Kolbensteuerkante 16 überlappt in der vierten Kolbenposition axial mit der zweiten Vertiefungssteuerkante 24. In der vierten Kolbenposition ist der zweite Fluidraum 11 mit dem ersten Fluidkanal 12 fluidkommunizierend verbunden, wobei der Kolben 5 die Mündungsöffnung 17 des ersten Fluidkanals 12 zumindest teilweise überdeckt, so dass der Strömungsquerschnitt der Mündungsöffnung 17 durch den Kolben 5 auf einen effektiven Strömungsquerschnitt reduziert wird. Die zweite Kolbensteuerkante 16 überdeckt in der vierten Kolbenposition die zweite Mündungssteuerkante 23 negativ und die zweite Vertiefungssteuerkante 24 positiv. Alternativ kann die zweite Kolbensteuerkante 16 in der vierten Kolbenposition in einer Nullüberdeckung mit der zweiten Vertiefungssteuerkante 24 stehen.

Bei der in Figur 10 gezeigten vierten Kolbenposition, wird die Vertiefung 6 durch den Kolben 5 derart verdeckt, dass der zweite Fluidraum 11 nicht unmittelbar mit der Vertiefung 6 fluidkommunizierend verbunden ist. Mit anderen Worten kann ein Fluid nicht vom ersten Fluidkanal 12 über die Vertiefung 6 in den zweiten Fluidraum 11 strömen oder vom zweiten Fluidraum 11 über die Vertiefung 6 in den ersten Fluidkanal 12 strömen.

Das in Figur 11 schematisch dargestellte Steuerventil 1 entspricht dem in Figur 6 gezeigten Steuerventil 1, wobei sich der Kolben 5 in einer fünften Kolbenposition befindet. Die fünfte Kolbenposition entspricht vorzugsweise der zweiten Endstellung des Kolbens 5.

In der fünften Kolbenposition befinden sich die erste Mündungssteuerkante 20 und die erste Vertiefungssteuerkante 21 zwischen der ersten Kolbensteuerkante 15 und der zweiten Kolbensteuerkannte 16. Der erste Fluidraum 10 ist in der vierten Kolbenposition durch den Kolben 5 von dem ersten Fluidkanal 12 und der Vertiefung 6 fluidkommunizierend getrennt. Die erste Kolbensteuerkante 15 überdeckt in der fünften Kolbenposition die erste Mündungssteuerkante 20 und die erste Vertiefungssteuerkante 21 positiv.

Bei der in Figur 11 gezeigten fünften Kolbenposition befindet sich die zweite Kolbensteuerkante 16 axial zwischen der ersten Vertiefungssteuerkante 21 und der zweiten Vertiefungssteuerkante 24. Der zweite Fluidraum 11 ist in der fünften Kolbenposition über die Vertiefung 6 und über die Mündungsöffnung 17 fluidkommunizierend mit dem Fluidkanal 12 verbunden.

Befindet sich der Kolben 5 in der fünften Kolbenposition, ist der zweite Fluidraum 11 über die Vertiefung 6 mit dem zweiten Fluidkanal 13 fluidkommunizierend verbunden. Dementsprechend kann ein Fluid vom zweiten Fluidkanal 13 über die Vertiefung 6 in den zweiten Fluidraum 11 strömen oder vom zweiten Fluidraum 11 über die Vertiefung 6 in den zweiten Fluidkanal 13 strömen. Die zweite Kolbensteuerkante 16 überdeckt in der fünften Kolbenposition die zweite Mündungssteuerkante 23 und die zweite Vertiefungssteuerkante 24 negativ.

Im Betrieb des Steuerventil 1 bewirkt dies vorteilhafter Weise, dass wenn sich der Kolben 5 von der vierten Kolbenposition in die fünfte Kolbenposition bewegt, der effektive Strömungsquerschnitt der Mündungsöffnung 17 nicht nur aufgrund der Hubbewegung des Kolbens vergrößert wird, sondern auch der Strömungsquerschnitt des Durchgangs 14 der Vertiefung 6 zum effektiven Strömungsquerschnitt beiträgt. Anders formuliert kann in der fünften Kolbenposition das Fluid nicht nur über die Mündungsöffnung 17 zwischen dem ersten Fluidkanal 12 und dem zweiten Fluidraum 11 hin und/oder her strömen, sondern zusätzlich auch über den Durchgang 14 der Vertiefung 6. Folglich wird durch das Steuerventil 1 beim Wechsel von der vierten Kolbenposition in die fünfte Kolbenposition schlagartig ein größerer Fluidstrom zwischen dem ersten Fluidkanal 12 und dem zweiten Fluidraum 11 zugelassen.

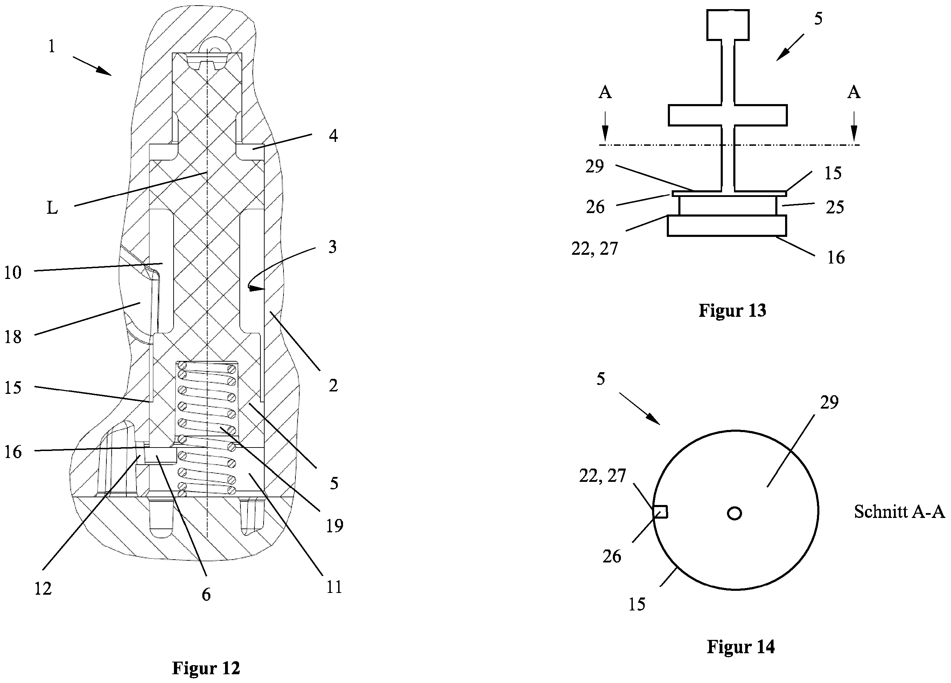

Figur 12 zeigt eine Schnittansicht des Steuerventils 1 gemäß dem in den Figuren 1-3 und 8 gezeigtem Steuerventil 1, wobei sich der Kolben 5 in der fünften Kolbenposition befindet. Im gezeigten Ausführungsbeispiel ist die fünfte Kolbenposition eine zweite Endposition des Kolbens 5, bei der der zweite Fluidraum 11 vorzugsweise ein maximales Volumen aufweist.

Figur 13 zeigt eine schematische Schnittdarstellung eines Ausführungsbeispiels eines Kolbens 5 mit einer Kolbenvertiefung 25. Eine axiale Begrenzungswand 27 der Kolbenvertiefung 25 bildet eine Kolbenvertiefungssteuerkante 22. Die Kolbenvertiefungssteuerkante 22 kann folglich auch als dritte Kolbensteuerkante 22 bezeichnet werden.

Die Kolbenvertiefung 25 erstreckt sich im dargestellten Ausführungsbeispiel über den gesamten Umfang des Kolbens 5. Alternativ kann sich die Kolbenvertiefung 25 auch nur über einen Teil des Umfangs des Kolbens 5 erstrecken. Die Kolbenvertiefung 25 ist axial zwischen der ersten Kolbensteuerkante 15 und der zweiten Kolbensteuerkante 16 angeordnet, so dass sich auch die Kolbenvertiefungssteuerkante 22 axial zwischen der ersten Kolbensteuerkante 15 und der zweiten Kolbensteuerkante 16 befindet.

Die Stirnfläche 29 des Kolbens 5 umfasst einen Kolbendurchgang 26. Der Kolbendurchgang 26 bewirkt im montierten Zustand des Kolbens 5, dass die Kolbenvertiefung 25 mit einem der Stirnfläche 29 zugewandten Fluidraum fluidkommunizierend verbunden ist.

Figur 14 zeigt die in Figur 13 eingezeichnete Schnittansicht A-A. Der Kolbendurchgang 26 ist im dargestellten Ausführungsbeispiel nur im linken Bereich der Stirnfläche 29 angeordnet. Bei alternativen Ausführungsbeispielen kann der Kolben 5 eine Vielzahl von Kolbendurchgängen 26 aufweisen.

### Bezugszeichenliste

| | | | |
|---|---|---|---|
| 1 | Steuerventil | 20 | Erste Mündungssteuerkante |
| 2 | Ventilgehäuse | 21 | Erste Vertiefungssteuerkante |
| 3 | Innenmantelfläche des Ventilgehäuses | 22 | Kolbenvertiefungssteuerkante |
| 4 | Kolbenkammer | 23 | Zweite Mündungssteuerkante |
| 5 | Kolben | 24 | Zweite Vertiefungssteuerkante |
| 6 | Vertiefung | 25 | Kolbenvertiefung |
| 7 | Erste Vertiefungswand | 26 | Kolbendurchgang |
| 8 | Zweite Vertiefungswand | 27 | axiale Begrenzungswand |
| 9 | Vertiefungsgrund | 28 | Stirnfläche des Kolbens |
| 10 | Erster Fluidraum | 29 | Stirnfläche des Kolbens |
| 11 | Zweiter Fluidraum | 30 | Pumpe |
| 12 | Erster Fluidkanal | 31 | Pumpengehäuse |
| 13 | Zweiter Fluidkanal | 32 | Förderkammer |
| 14 | Durchgang | 33 | Pumpenkammereinlass |
| 15 | Erste Kolbensteuerkante | 34 | Pumpenkammerauslass |
| 16 | Zweite Kolbensteuerkante | 35 | Förderrotor |
| 17 | Mündungsöffnung | 36 | Pumpenkammer |
| 18 | Dritter Fluidkanal | 37 | Verstellorgan |
| 19 | Ventilfederelement | 38 | Stellkammer |
| | | 39 | Pumpenfederelement |
| L | Längsachse der Kolbenkammer | | |
| R | Rotationsachse des Förderrotors | | |

## Patentansprüche

1. Steuerventil (1) für eine Pumpe zur Förderung eines Fluids, das Steuerventil (1) umfassend:
(a) ein Ventilgehäuse (2), welches eine Kolbenkammer (4) begrenzt,
(b) einen Kolben (5), der innerhalb der Kolbenkammer (4) bewegbar ist,
(c) einen Fluidkanal (12), der mit einer Mündungsöffnung (17) in die Kolbenkammer (4) mündet, wobei
(d) die Mündungsöffnung (17) eine Mündungssteuerkante (20, 23) definiert, wobei
(e) das Ventilgehäuse (2) eine Vertiefung (6) umfasst, die sich in den Fluidkanal (12) erstreckt und die Vertiefung (6) eine zur Mündungssteuerkante (20, 23) axial versetzte Vertiefungssteuerkante (21, 24) definiert, oder
(f) das Ventilgehäuse (2) eine Vertiefung (6) umfasst, die sich in den Fluidkanal (12) erstreckt und die Vertiefung (6) eine zur Mündungssteuerkante (20, 23) axial versetzte Vertiefungssteuerkante (21, 24) definiert und der Kolben (5) eine Kolbenvertiefung (25) umfasst, die eine Kolbenvertiefungssteuerkante (22) definiert,
**dadurch gekennzeichnet, dass**
(g) in einer Schnittansicht der Kolbenkammer (4) die Vertiefungssteuerkante (21, 24) gemeinsam mit einer Flucht der Vertiefungssteuerkante (21, 24) eine Sekante in Bezug auf den Außenumfang der Mündungsöffnung (17) bildet.

2. Steuerventil nach dem vorhergehenden Anspruch, **dadurch gekennzeichnet, dass** der Kolben (5) innerhalb der Kolbenkammer (4) entlang seiner Längsachse (L) axial bewegbar ist.

3. Steuerventil (1) nach einem der vorhergehenden Ansprüche, **dadurch gekennzeichnet, dass** die Vertiefung (6) die Querschnittsfläche der Kolbenkammer (4) innerhalb der axialen Erstreckung der Mündungsöffnung (17) vergrößert.

4. Steuerventil (1) nach einem der vorhergehenden Ansprüche, **dadurch gekennzeichnet, dass** die Mündungssteuerkante (20, 23) und die Vertiefungssteuerkante (21, 24) so axial zueinander versetzt sind, dass eine Kolbensteuerkante (15, 16) des Kolbens (5) in einer ersten Kolbenposition die Mündungssteuerkante (20, 23) negativ überdeckt und die Vertiefungssteuerkante (21, 24) positiv überdeckt oder zur Vertiefungssteuerkante (21, 24) eine Nullüberdeckung aufweist.

5. Steuerventil (1) nach Anspruch 4, **dadurch gekennzeichnet, dass** die Mündungssteuerkante (20, 23) und die Vertiefungssteuerkante (21, 24) so axial zueinander versetzt sind, dass die Kolbensteuerkante (15, 16) die Mündungssteuerkante (20, 23) und die Vertiefungssteuerkante (21, 24) in einer zweiten Kolbenposition negativ überdeckt.

6. Steuerventil (1) nach einem der vorhergehenden Ansprüche, **dadurch gekennzeichnet, dass** ein vom Kolben (5) und vom Ventilgehäuse (2) begrenzter Fluidraum (10, 11) in der ersten Kolbenposition mit dem Fluidkanal (12) fluidkommunizierend verbunden ist und eine unmittelbare Fluidströmung zwischen dem Fluidraum (10, 11) und der Vertiefung (6) in der ersten Kolbenposition durch den Kolben (5) verhindert wird.

7. Steuerventil (1) nach Anspruch 6, **dadurch gekennzeichnet, dass** der Fluidraum (10, 11) in der zweiten Kolbenposition mit dem Fluidkanal (12) und der Vertiefung (6) unmittelbar fluidkommunizierend verbunden ist.

8. Steuerventil (1) nach einem der Ansprüche 54 oder 16, **dadurch gekennzeichnet, dass** der Strömungsquerschnitt der Mündungsöffnung (17) in der ersten und/oder in der zweiten Kolbenposition durch den Kolben (5) auf einen effektiven Strömungsquerschnitt reduziert wird und die Vertiefung (6) nur in der zweiten Kolbenposition eine Vergrößerung des effektiven Strömungsquerschnittes bewirkt.

9. Steuerventil (1) nach einem der Ansprüche 54 bis 87, **dadurch gekennzeichnet, dass** der Kolben (5) den Fluidraum (10, 11) in einer dritten Kolbenposition vom Fluidkanal (12) und von der Vertiefung (6) fluidisch trennt.

10. Steuerventil (1) nach einem der Ansprüche 54 bis 93, **dadurch gekennzeichnet, dass** das Steuerventil (1) einen ersten Fluidraum (10) und einen zusätzlichen zweiten Fluidraum (11) aufweist, und der zweite Fluidraum (11) in der ersten, der zweite und/oder der dritten Kolbenposition vom Fluidkanal (12) fluidisch getrennt ist und in einer vierten Kolbenposition mit dem Fluidkanal (12) fluidisch verbunden ist, wobei der erste Fluidraum (10) in der vierten Kolbenposition vorzugsweise vom Fluidkanal (12) fluidisch getrennt ist.

11. Steuerventil (1) nach Anspruch 109, **dadurch gekennzeichnet, dass** der Kolben (5) entlang einer ersten Bewegungsrichtung eine erste Endstellung und entlang einer, der ersten Bewegungsrichtung entgegengesetzten, zweiten Bewegungsrichtung eine zweite Endstellung aufweist, wobei der Kolben (5) in der ersten Endstellung die erste oder die zweite Kolbenposition und in der zweiten Endstellung die vierte Kolbenposition einnimmt.

12. Steuerventil (1) nach einem der vorhergehenden Ansprüche, **dadurch gekennzeichnet, dass** die Vertiefung (6) axial durch eine erste Vertiefungswand (7) und eine der ersten Vertiefungswand (7) gegenüberliegenden zweiten Vertiefungswand (8) begrenzt wird, wobei eine der Vertiefungswände (7, 8) die Vertiefungssteuerkante (21, 24) definiert.

13. Steuerventil (1) nach einem der vorhergehenden Ansprüche, wobei die Vertiefung (6) eine Nut (6), vorzugsweise eine zur Kolbenkammer (4) hin offene, sichelförmige Nut (6), in der Innenmantelfläche (3) des Ventilgehäuses (2) ist.

14. Steuerventil (1) nach einem der vorhergehenden Ansprüche, **dadurch gekennzeichnet, dass** der Kolben (5) eine Kolbenvertiefung (25) umfasst, die eine Kolbenvertiefungssteuerkante (22) definiert und die Kolbenvertiefung (25) eine Vertiefung (25), vorzugsweise eine Nut (25), in der Außenumfangsfläche des Kolbens (5) ist, wobei die Kolbenvertiefung (25) eine axiale Begrenzungswand (27) aufweist, welche die Kolbenvertiefungssteuerkante (23) bildet, und der Kolben (5) einen Durchgang (26) aufweist, der sich axial von der Kolbenvertiefung (25) bis zu einer Stirnfläche (29) des Kolbens (5) erstreckt, wobei der Durchgang (26) einen engsten Strömungsquerschnitt aufweist, der kleiner ist als der Strömungsquerschnitt der Mündungsöffnung (17).

15. Pumpe (30) zur Förderung eines Fluids, die Pumpe (30) umfassend:
(a) ein eine Pumpenkammer (36) begrenzendes Pumpengehäuse (31), wobei die Pumpenkammer (36) in einem Niederdruckbereich einen Pumpenkammereinlass (33) und in einem Hochdruckbereich einen Pumpenkammerauslass (34) für das zu fördernde Fluid aufweist,
(b) einen Förderrotor (35), der in der Pumpenkammer (36) angeordnet ist und um eine Rotationsachse (R) drehbar ist, um das Fluid von dem Niederdruckbereich zum Hochdruckbereich zu fördern,
(c) ein Verstellorgan (37), um das Fördervolumen der Pumpe (30) zu verstellen, wobei zwischen dem Verstellorgan (37) und dem Pumpengehäuse (31) eine Stellkammer (38) zum Verstellen des Verstellorgans (37) ausgebildet ist, und
(d) ein Steuerventil (1) nach einem der vorhergehenden Ansprüche, zur Steuerung eines Fluiddrucks in der Stellkammer (38).

## Claims

1. A control valve (1) for a pump for delivering a fluid, the control valve (1) comprising:
(a) a valve housing (2) which delineates a piston chamber (4);
(b) a piston (5) which can be moved within the piston chamber (4); and
(c) a fluid channel (12) which ports into the piston chamber (4) via a port opening (17), wherein
(d) the port opening (17) defines a port control edge (20, 23),
(e) the valve housing (2) comprises a recess (6) which extends into the fluid channel (12), and the recess (6) defines a recess control edge (21, 24) which is axially offset with respect to the port control edge (20, 23), or
(f) the valve housing (2) comprises a recess (6) which extends into the fluid channel (12), and the recess (6) defines a recess control edge (21, 24) which is axially offset with respect to the port control edge (20, 23), and the piston (5) comprises a piston recess (25) which defines a piston recess control edge (22),
**characterised in that**
(g) in a sectional view of the piston chamber (4), the recess control edge (21, 24) and an alignment of the recess control edge (21, 24) together form a secant in relation to the outer circumference of the port opening (17).

2. The control valve (1) according to the preceding claim, **characterised in that** the piston (5) can be moved within the piston chamber (4) axially along its longitudinal axis (L).

3. The control valve (1) according to any one of the preceding claims, **characterised in that** the recess (6) increases the cross-sectional area of the piston chamber (4) within the axial extent of the port opening (17).

4. The control valve (1) according to any one of the preceding claims, **characterised in that** the port control edge (20, 23) and the recess control edge (21, 24) are axially offset with respect to each other such that a piston control edge (15, 16) of the piston (5) negatively overlaps the port control edge (20, 23) and positively overlaps the recess control edge (21, 24) or exhibits zero overlap with the recess control edge (21, 24) in a first piston position.

5. The control valve (1) according to claim 4, **characterised in that** the port control edge (20, 23) and the recess control edge (21, 24) are axially offset with respect to each other such that the piston control edge (15, 16) negatively overlaps the port control edge (20, 23) and the recess control edge (21, 24) in a second piston position.

6. The control valve (1) according to any one of the preceding claims, **characterised in that** a fluid space (10, 11) which is delineated by the piston (5) and valve housing (2) is connected in fluid communication with the fluid channel (12), and a direct flow of fluid between the fluid space (10, 11) and the recess (6) is prevented by the piston (5), in the first piston position.

7. The control valve (1) according to claim 6, **characterised in that** the fluid space (10, 11) is connected in direct fluid communication with the fluid channel (12) and the recess (6) in the second piston position.

8. The control valve (1) according to any one of claims 5 and 7, **characterised in that** the flow cross-section of the port opening (17) is reduced by the piston (5) to an effective flow cross-section in the first and/or second piston position, and the recess (6) increases the effective flow cross-section in the second piston position only.

9. The control valve (1) according to any one of claims 5 to 8, **characterised in that** the piston (5) fluidly separates the fluid space (10, 11) from the fluid channel (12) and from the recess (6) in a third piston position.

10. The control valve (1) according to any one of claims 5 to 9, **characterised in that** the control valve (1) comprises a first fluid space (10) and an additional second fluid space (11), and the second fluid space (11) is fluidically separated from the fluid channel (12) in the first, second and/or third piston position and fluidically connected to the fluid channel (12) in a fourth piston position, wherein the first fluid space (10) is preferably separated fluidically from the fluid channel (12) in the fourth piston position.

11. The control valve (1) according to claim 10, **characterised in that** the piston (5) comprises a first end position along a first direction of movement and a second end position along a second direction of movement which is opposite to the first direction of movement, wherein the piston (5) assumes the first or second piston position in the first end position and assumes the fourth piston position in the second end position.

12. The control valve (1) according to any one of the preceding claims, **characterised in that** the recess (6) is axially delineated by a first recess wall (7) and a second recess wall (8) which lies opposite the first recess wall (7), wherein one of the recess walls (7, 8) defines the recess control edge (21, 24).

13. The control valve (1) according to any one of the preceding claims, wherein the recess (6) is a groove (6), preferably a crescent-shaped groove (6) which is open towards the piston chamber (4), in the inner surface area (3) of the valve housing (2).

14. The control valve (1) according to any one of the preceding claims, **characterised in that** the piston recess (25) is a recess (25), preferably a groove (25), in the outer circumferential surface of the piston (5), wherein the piston recess (25) comprises an axial boundary wall (27) which forms the piston recess control edge (23), and the piston (5) comprises a passage (26) which extends axially from the piston recess (25) up to an end face (29) of the piston (5), wherein the passage (26) exhibits a narrowest flow cross-section which is smaller than the flow cross-section of the port opening (17).

15. A pump (30) for delivering a fluid, the pump (30) comprising:
(a) a pump housing (31) which delineates a pump chamber (36), wherein the pump chamber (36) comprises a pump chamber inlet (33) in a low-pressure region, and a pump chamber outlet (34) in a high-pressure region, for the fluid to be delivered;
(b) a delivery rotor (35) which is arranged in the pump chamber (36) and can be rotated about an axis of rotation (R) in order to deliver the fluid from the low-pressure region to the high-pressure region;
(c) an adjusting member (37) in order to adjust the delivery volume of the pump (30), wherein an actuating chamber (38) for adjusting the adjusting member (37) is embodied between the adjusting member (37) and the pump housing (31); and
(d) a control valve (1) according to any one of the preceding claims, for controlling a fluid pressure in the actuating chamber (38).

## Revendications

1. Soupape de commande (1) pour pompe pour refouler un fluide, la soupape de commande (1) comprenant :
(a) un boîtier de soupape (2) délimitant une chambre de piston (4) ;
(b) un piston (5) mobile à l'intérieur de la chambre de piston (4) ; et
(c) un canal de fluide (12) dont une ouverture d'embouchure (17) débouche dans la chambre de piston (4),
(d) l'ouverture d'embouchure (17) définissant un bord de commande d'embouchure (20, 23),
(e) le boîtier de soupape (2) comprenant une cavité (6) s'étendant dans le canal de fluide (12), et la cavité (6) définissant un bord de commande de cavité (21, 24) décalé axialement par rapport au bord de commande d'embouchure (20, 23), ou
(f) le boîtier de soupape (2) comprenant une cavité (6) s'étendant dans le canal de fluide (12), la cavité (6) définissant un bord de commande de cavité (21, 24) décalé axialement par rapport au bord de commande d'embouchure (20, 23), et le piston (5) comprenant une cavité de piston (25) définissant un bord de commande de cavité de piston (22),
**caractérisée en ce que**
(g) lorsque la chambre de piston (4) est vue en coupe, le bord de commande de cavité (21, 24) forme avec un alignement du bord de commande de cavité (21, 24) une sécante par rapport à la circonférence extérieure de l'ouverture d'embouchure (17).

2. Soupape de commande (1) selon la revendication précédente, **caractérisée en ce que** le piston (5) est mobile axialement à l'intérieur de la chambre de piston (4) le long de son axe longitudinal (L).

3. Soupape de commande (1) selon l'une quelconque des revendications précédentes, **caractérisée en ce que** la cavité (6) augmente la section transversale de la chambre de piston (4) dans l'étendue axiale de l'ouverture d'embouchure (17).

4. Soupape de commande (1) selon l'une quelconque des revendications précédentes, **caractérisée en ce que** le bord de commande d'embouchure (20, 23) et le bord de commande de cavité (21, 24) sont décalés axialement l'un par rapport à l'autre, de sorte qu'un bord de commande de piston (15, 16) du piston (5) chevauche négativement le bord de commande d'embouchure (20, 23) et chevauche positivement le bord de commande de cavité (21, 24) ou présente un chevauchement nul par rapport au bord de commande de cavité (21, 24) dans une première position de piston.

5. Soupape de commande (1) selon la revendication 4, **caractérisée en ce que** le bord de commande d'embouchure (20, 23) et le bord de commande de cavité (21, 24) sont décalés axialement l'un par rapport à l'autre, de sorte que le bord de commande de piston (15, 16) chevauche négativement le bord de commande d'embouchure (20, 23) et le bord de commande de cavité (21, 24) dans une deuxième position de piston.

6. Soupape de commande (1) selon l'une quelconque des revendications précédentes, **caractérisée en ce qu'**un espace de fluide (10, 11) délimité par le piston (5) et le boîtier de soupape (2) est relié au canal de fluide (12) en communication fluidique dans la première position de piston, et un écoulement de fluide direct entre l'espace de fluide (10, 11) et la cavité (6) est empêché par le piston (5) dans la première position de piston.

7. Soupape de commande (1) selon la revendication 6, **caractérisée en ce que** l'espace de fluide (10, 11) est relié au canal de fluide (12) et à la cavité (6) en communication fluidique direct dans la deuxième position de piston.

8. Soupape de commande (1) selon l'une quelconque des revendications 5 et 7, **caractérisée en ce que** la section traversale d'écoulement de l'ouverture d'embouchure (17) est réduite à une section traversale d'écoulement effective par le piston (5) dans la première et / ou deuxième position de piston, et la cavité (6) augmente la section traversale d'écoulement effective seulement dans la deuxième position de piston.

9. Soupape de commande (1) selon l'une quelconque des revendications 5 à 8, **caractérisée en ce que** le piston (5) sépare fluidiquement l'espace de fluide (10, 11) du canal de fluide (12) et de la cavité (6) dans une troisième position de piston.

10. Soupape de commande (1) selon l'une quelconque des revendications 5 à 9, **caractérisée en ce que** la soupape de commande (1) présente un premier espace de fluide (10) et un second espace de fluide supplémentaire (11), le second espace de fluide (11) étant séparé fluidiquement du canal de fluide (12) dans la première, deuxième et / ou troisième position de piston et relié fluidiquement au canal de fluide (12) dans une quatrième position de piston, le premier espace de fluide (10) étant de préférence séparé fluidiquement du canal de fluide (12) dans la quatrième position de piston.

11. Soupape de commande (1) selon la revendication 10, **caractérisée en ce que** le piston (5) présente une première position d'extrémité dans une première direction de mouvement et une seconde position d'extrémité dans une seconde direction de mouvement opposée à la première direction de mouvement, le piston (5) prenant la première ou deuxième position de piston dans la première position d'extrémité et la quatrième position de piston dans la seconde position d'extrémité.

12. Soupape de commande (1) selon l'une quelconque des revendications précédentes, **caractérisée en ce que** la cavité (6) est délimitée axialement par une première paroi de cavité (7) et une seconde paroi de cavité (8) opposée à la première paroi de cavité (7), l'une des parois de cavité (7, 8) définissant le bord de commande de cavité (21, 24).

13. Soupape de commande (1) selon l'une quelconque des revendications précédentes, dans laquelle la cavité (6) est une rainure (6), de préférence une rainure (6) en forme de faucille ouverte vers la chambre de piston (4), dans la surface d'enveloppe intérieure (3) du boîtier de soupape (2).

14. Soupape de commande (1) selon l'une quelconque des revendications précédentes, **caractérisée en ce que** la cavité de piston (25) est une cavité (25), de préférence une rainure (25), dans la surface circonférentielle extérieure du piston (5), la cavité de piston (25) présentant une paroi de délimitation axiale (27) formant le bord de commande de cavité de piston (23), le piston (5) présentant un passage (26) s'étendant axialement depuis la cavité de piston (25) jusqu'à une surface frontale (29) du piston (5), le passage (26) présentant une section transversale d'écoulement la plus étroite inférieure à la section transversale d'écoulement de l'ouverture d'embouchure (17).

15. Pompe (30) pour refouler un fluide, la pompe (30) comprenant :
(a) un boîtier de pompe (31) délimitant une chambre de pompe (36), la chambre de pompe (36) présentant pour le fluide à refouler une entrée de chambre de pompe (33) dans une zone basse pression et une sortie de chambre de pompe (34) dans une zone haute pression ;
(b) un rotor de refoulement (35) disposé dans la chambre de pompe (36) et rotatif autour d'un axe de rotation (R) pour refouler le fluide depuis la zone basse pression vers la zone haute pression ;
(c) un élément de réglage (37) pour régler le volume de refoulement de la pompe (30), une chambre d'actionnement (38) pour régler l'élément de réglage (37) étant réalisée entre l'élément de réglage (37) et le boîtier de pompe (31) ; et
(d) une soupape de commande (1) selon l'une quelconque des revendications précédentes pour commander une pression de fluide dans la chambre d'actionnement (38).
